# EUROPEAN PATENT SPECIFICATION

(11) **EP 4 180 796 B1**
(45) Date of publication and mention of the grant of the patent: **30.04.2025**
(21) Application number: 21207842.2
(22) Date of filing: 11.11.2021
(51) Int. Cl.: G01N 21/41, G01N 21/552

(54) **REFRACTIVE INDEX SENSOR DEVICE**
BRECHUNGSINDEX-SENSORVORRICHTUNG
DISPOSITIF DE CAPTEUR D'INDICE DE RÉFRACTION

(43) Date of publication of application: 17.05.2023
(73) Proprietor: IHP GmbH - Innovations for High Performance Microelectronics / Leibniz-Institut für innovative Mikroelektronik, 15236 Frankfurt (Oder) (DE); Brandenburgische Technische Universität Cottbus-Senftenberg, 03046 Cottbus (DE)
(72) Inventor: MAI, Christian, 15236 Frankfurt (Oder) (DE); SPIRITO, Davide, 15236 Frankfurt (Oder) (DE); REITER, Sebastian, 03046 Cottbus (DE); FISCHER, Inga, 03046 Cottbus (DE)
(74) Representative: Eisenführ Speiser

(56) References cited:
- WO-A1-2009/112288
- AUGEL L ET AL: "An Integrated Plasmonic Refractive Index Sensor: Al nanohole arrays on Ge PIN photodiodes", 2017 IEEE INTERNATIONAL ELECTRON DEVICES MEETING (IEDM), IEEE, 2 December 2017 (2017-12-02), XP033306110, DOI: 10.1109/IEDM.2017.8268528
- AUGEL L ET AL: "Integrated collinear refractive index sensor with Ge PIN photodiodes", ARXIV.ORG, CORNELL UNIVERSITY LIBRARY, 201 OLIN LIBRARY CORNELL UNIVERSITY ITHACA, NY 14853, 4 February 2019 (2019-02-04), XP081024935, DOI: 10.1021/ACSPHOTONICS.8B01067

## Description

The invention relates to a refractive index sensor device for detecting a presence of an analyte and to a method of fabricating a refractive index sensor device. Moreover, the invention relates to a method for detecting an analyte with a refractive index sensor device.

A refractive index sensor device can be used for detecting a presence of an analyte contained in a sample that the refractive index sensor device is exposed to. A refractive index sensor device often comprises a metal film coated with immobilized molecules thus implementing a biosensor. The immobilized molecules can be used as affinity binding receptors. For example, for detecting a presence of an analyte such as glucose, an affinity binding protein such as concanavalin A (conA) can be employed as the affinity binding receptor.

If the refractive index sensor device is exposed to light, surface plasmon polaritons can be induced at the surface of the metal film. If in a next step, the refractive index sensor device is exposed to the sample, the analyte such as glucose may bind to the affinity binding receptors on the metal film. Thereby, the adsorbing molecules cause a change in the local refractive index thereby changing the resonance conditions of the surface plasmon polaritons. These changes in the resonance conditions of the surface plasmon polaritons can be detected with a spectrometer to obtain whether an analyte is actually present in the sample.

An approach aiming for detecting a change in the local refractive index without subsequent spectrometer evaluation was proposed by L. Augel, et al., in "An integrated plasmonic refractive index sensor: Al nanohole arrays on Ge PIN photodiodes," IEEE International Electron Devices Meeting (IEDM), 40.5.1-40.5.4. (2017) and by L. Augel, et al., in "Integrated collinear refractive index sensor with Ge PIN photodiodes", ACS Photonics 5, 4586 (2018).

In these articles, it is suggested to use a vertical germanium (Ge) heterostructure PIN-diode in combination with a plasmonic nanohole array structured directly into the diode aluminium (Al) top contact metallization. The nanohole array functions as a filter for impinging light and at the same time as the top contact. Light impinging onto the nanohole array is filtered by the nanohole array such that transmission of light through the nanoholes is substantially possible only at the resonance wavelength. Light reaching the PIN-diode through the nanoholes can be absorbed by the PIN-diode thereby inducing a photo current. The photo current can be used to detect surface refractive index changes under top illumination and without the aid of signal amplification circuitry.

The present invention is based on the objective of providing an improved refractive index sensor device and an improved method of fabricating a refractive index sensor device. Further, the present invention is based on the objective of providing an improved method of detecting an analyte.

With respect to the refractive index sensor device this objective is achieved by a refractive index sensor device for detecting a presence of an analyte according to claim 1. Preferred embodiments of the refractive index sensor device according to the invention are subject to the dependent claims.

According to the invention, a refractive index sensor device is proposed comprising a sensor layer and a nanohole array.

The sensor layer comprises a number of PIN-diode stripes, preferably, at least two PIN-diode stripes, each of the PIN-diode stripes being formed by a p-type semiconductor stripe, an intrinsic semiconductor material stripe and an n-type semiconductor stripe. The sensor layer further comprises an insulating material.

The PIN-diode stripes run parallel to each other within the sensor layer along an in-plane direction that is vertical to a stacking direction of layers of the refractive index sensor device. Furthermore, in the sensor layer the PIN-diode stripes are electrically and spatially separated from each other by the insulating material.

The nanohole array is arranged on top of the sensor layer along the stacking direction. The nanohole array is formed by a plate-shaped element having a number of feedthroughs extending through said plate-shaped element and running parallel to the stacking direction. The feedthroughs are configured such that impinging light can travel through the feedthroughs to be absorbed in the sensor layer.

For detecting the presence of an analyte in a sample, e.g., a liquid or gaseous fluid, with the refractive index sensor device, the sample can be arranged on top of the nanohole array along the stacking direction. The sample can be in direct contact with nanohole array or can be located at a distance to the nanohole array between the nanohole array and the light source such that light emitted by the light source traverses the sample before impinging onto the nanohole array.

The local refractive index refers to the refractive index of the sample. With a presence of the analyte within the sample, the local refractive index of the sample may change. A change in the local refractive index means that the local refractive index in the sample is different with or without the analyte being present in the sample.

Surface plasmon polaritons in the nanohole array induced by impinging light are sensitive to this change in local refractive index caused by the presence of the analyte in the sample. In particular, by the presence of an analyte and the thereby induced change in local refractive index, the resonance wavelength of the nanohole array may be changed.

In fact, the resonance wavelength of the nanohole array may depend on the local refractive index above the nanohole array along the stacking direction. Thus, if the local refractive index above the nanohole array changes, the resonance wavelength of the nanohole array, and, accordingly the filtering property of the nanohole array may change, too.

A change of the resonance wavelength of the nanohole array and thus of its filtering properties may thus be observed in a corresponding change in the profile of light after having traversed the nanohole array. This change in the light profile can be indicative of the presence of the analyte in the sample. For example, a change of the local refractive index may result in a frequency shift of a light peak or a change in the intensity of a light peak in the light profile.

By means of the nanohole array it is possible to filter impinging light such that substantially only light at a resonance wavelength is transmitted through feedthroughs. The light profile of light having traversed the nanohole array thus may show a sharp peak at the resonance wavelength. It is in particular the position of this resonance peak as a function of wavelength or the intensity of this resonance peak that can be indicative of a change of the local refractive index.

Since the resonance wavelength of the nanohole array may be changed by the presence of the sample, also a property of the photo current induced by the impinging light in the sensor layer may change. Thus, by analysing the photo current in the sensor layer, a presence of an analyte within a sample to which the refractive index sensor device is exposed may be detected.

In particular, the wavelength response of the nanohole array and thus of the PIN-diode stripes is due to the surface plasmon polaritons. With the refractive index sensor device according to the invention, the induced surface plasmon polaritons are not directly measured. Instead, a photo current is measured that is indicative of a change of the local refractive index above the refractive index sensor device along the stacking direction.

By means of the nanohole array it is possible to filter impinging light such that substantially only light at a resonance wavelength is transmitted through feedthroughs. The resonance wavelength is *inter alia* dependent on a spacing between the feedthroughs of the nanohole array, i.e., the resonance wavelength is *inter alia* dependent on the lattice constant of a grating formed by the nanohole array. The feedthroughs of the nanohole array preferably form a lattice with a lattice spacing of 0.5 µm to 1.2 µm, e.g., 0.5 µm to 0.9 µm. The feedthroughs can have a diameter between 300 nm to 800 nm, in particular between 500 nm and 700 nm, more preferably between 600 nm and 700 nm. A lattice with feedthroughs having the above-mentioned dimension is particularly suitable for filtering a transmission wavelength in the range of 400 nm to 1600 nm, in particular of 1,55 µm used for long-distance optical data transmission.

The filtering of the impinging light with the nanohole array may lead to a large sensitivity of the refractive index sensor device. In particular, a relatively small change in the peak position of the resonance peak or a relatively small change in the intensity of the resonance peak may still be reliably detected in the induced photo current.

In operation of the refractive index sensor device, a bias voltage can be applied to the nanohole array to increase the limit of detection of the refractive index sensor device. The limit of detection defines the lowest change in the local refractive index that can be reliably detected with the refractive index sensor device. The limit of detection of the refractive index sensor device can be altered by applying a bias voltage to the nanohole array since by applying a bias voltage, the ratio of dark current and total current can be changed.

For example, a DC voltage can be applied to the nanohole array to increase the limit of detection of the refractive index sensor device.

It may also be possible to apply an AC voltage to the nanohole array to control the frequency of the surface plasmon polaritons induced in the nanohole array.

In operation of the refractive index sensor device, light is traversing through the feedthroughs and impinges onto the sensor layer where it is absorbed. The sensor layer comprises a number of PIN-diode stripes that are arranged within a horizontal plane that is perpendicular to the stacking direction of layers of the refractive index sensor device. In particular, the impinging light is absorbed by the PIN-diode stripes thereby inducing a photo current of charge carriers travelling from the n-type semiconductor stripes to the p-type semiconductor stripes of the respective PIN-diode stripes.

In each of the PIN-diode stripes, the p-type semiconductor stripe, the intrinsic semiconductor material stripe and the n-type semiconductor stripe are arranged next to each other perpendicularly to the stacking direction thereby implementing a horizontal PIN-diode. The PIN-diode stripes thus each form horizontal PIN-diodes with respect to the stacking direction constituting the corresponding vertical direction. Accordingly, a photo current induced in the PIN-diode stripes travels in a direction perpendicular to the stacking direction.

Preferably, in directly adjacent PIN-diode stripes, the positions of the respective p-type semiconductor stripes and n-type semiconductor stripes are reversed such that a p-type semiconductor stripe of a PIN-diode stripe faces a p-type semiconductor stripe of a neighboring PIN-diode stripe and an n-type semiconductor stripe of a PIN-diode stripe faces an n-type semiconductor stripe of a neighboring PIN-diode stripe. Thus, when looking onto the sensor layer along the stacking direction, n-type semiconductor stripes and p-type semi-conductor stripes are arranged alternately in pairs of two adjacent p-type semiconductor stripes and two adjacent n-type semiconductor stripes, respectively, within the sensor layer. Preferably, the PIN-diode stripes are made of Ge. In this case, the PIN-diode stripes each comprise a p-doped Ge-stripe as the p-type semiconductor stripe and an n-doped Ge-stripe as the n-type semiconductor stripe. Between the p-doped and n-doped Ge-stripes, the Ge is intrinsically doped thus implementing the intrinsic semiconductor material stripe of the PIN-diode stripe. The sensor layer, preferably, has a thickness along the stacking direction of 400 nm or more, e.g., from 500 nm to 600 nm. Depending to the particular application, the sensor layer thickness may be between 400 nm and 1 µm.

Preferably, the insulating material comprises or is SiO₂. Preferably, the PIN-diode stripes comprise at least one of Ge, GeSn, SiGeSn and InP.

Preferably, the width of a PIN-diode stripe in a direction perpendicular to the stacking direction is 1 µm or more but preferably no more than 10 µm. The length of the PIN-diode stripes may be in the range of several 10 µm depending on the size of the refractive index sensor device.

The invention is based on the recognition that with a lateral arrangement of a plurality of adjacent PIN-diode stripes, the PIN-diodes can be fabricated with comparatively high crystal quality. This is due to the fact that for fabricating the PIN-diode stripes, an intrinsically doped semiconductor layer, e.g., intrinsic Ge, can be grown epitaxially on a substrate, such as a Si-substrate. Only after having grown the intrinsically doped semiconductor layer, the semiconductor layer is doped to implement the PIN-diode stripes. This can be accomplished by using lithographic masks. The p-doped semiconductor stripes and the n-doped semiconductor stripes can thus be fabricated after the intrinsic semiconductor stripe has been grown by selectively doping the intrinsic semiconductor stripe, e.g., made of Ge.

In contrast, when fabricating vertical PIN-diodes, already doped semiconductor layers have to be epitaxially grown often resulting in a comparatively lower crystal quality.

However, with a better crystal quality, the dark current induced during operation can be significantly reduced. In fact, it was found that the dark current in a refractive index sensor device with PIN-diode stripes according to the invention shows a lower dark current compared to a refractive index sensor device with a vertical PIN-diode up to a factor of 1000.

Advantageously, the refractive index sensor device according to the invention thus may have a comparatively lower limit of detection. With the refractive index sensor device according to the invention, it can thus be possible to more reliably detect an analyte in a sample. In particular, even smaller amounts of an analyte may be detected more reliably with the refractive index sensor device according to the invention.

In addition, advantageously, detecting an analyte with the refractive index sensor device according to the invention makes a spectrometer unnecessary and may not require sophisticated signal processing.

The refractive index sensor device, in general, can be fabricated in a complementary metal-oxide-semiconductor (CMOS)/Bipolar CMOS (BiCMOS)-line and can therefore be fabricated at comparatively low costs and in economically relevant amounts. A smaller refractive index sensor device can be integrated more easily in an integrated circuit design or chip design.

In the refractive index sensor device of the present invention, the nanohole array is not used as one of the contacts for collecting the photo current. In the refractive index sensor device of the present invention, the nanohole array and contacts are thus distinct parts of the refractive index sensor device. This yields the advantage that the material of the nanohole array and its geometry can be chosen independently of the material and geometry of electrical contacts of the refractive index sensor device. It thus offers a greater freedom in designing the refractive index sensor device to suit best the needs for specific applications. It also allows applying a voltage to the nanohole array to alter and/or improve the filtering properties of the nanohole array.

The refractive index sensor device according to the invention preferably further comprises a number of p-contacts to which the p-type semiconductor stripes are electrically connected, and a number of n-contacts to which the n-type semiconductor stripes are electrically connected, for collecting charge carriers of a photo current induced by light impinging onto the sensor layer through the plate-shaped element's feedthroughs.

In particular, it is preferred that respective p-type semiconductor stripes of two adjacent PIN-diode stripes are electrically connected to each other via a p-contact and/or wherein the n-type semiconductor stripes of two adjacent PIN-diode stripes are electrically connected to each other via a n-contact. One p-contact thus electrically connects two adjacent PIN-diode stripes and in particular, the p-type semiconductor stripes of these two PIN-diode stripes. Correspondingly, one n-contact electrically connects two adjacent PIN-diode stripes and in particular, the two n-type semiconductor stripes of these two PIN-diode stripes. Thereby, a parallel connection is implemented.

Preferably, the p-contacts and n-contacts are made of an alloy from silicon (Si) and cobalt (Co).

Preferably, the number of p-contacts each electrically connecting the p-type semiconductor stripes of two adjacent PIN-diode stripes are in electrical contact with a main p-contact and/or wherein the number of n-contacts each electrically connecting the n-type semiconductor stripes of two adjacent PIN-diode stripes are in electrical contact with a main n-contact.

The charge carriers collected by the individual contacts, e.g., the p-contacts or n-contacts, can be combined and collected by the respective main contact, e.g., the main p-contact or the main n-contact. The combined and collected photo current can be analyzed for determining a change in the local refractive index and thus for detecting a presence of an analyte. The combined photo current is expected to have an improved signal-to-noise ratio compared to individual photo currents collected at the individual n-contacts or p-contacts of the refractive index sensor device.

Preferably, the p-contacts are located at a p-contact-side of the refractive index sensor device and/or the n-contacts are located at an n-contact-side that is opposite to the refractive index sensor device's p-contact-side.

It is preferred that the p-type semiconductor stripes are connected to the p-contacts at one of their ends that is located at a p-contact-side of the refractive index sensor device. Correspondingly, it is preferred that the n-type semiconductor stripes are connected to the n-contacts at one of their ends that is located at a n-contact-side that is opposite to the refractive index sensor device's p-contact-side.

Accordingly, that side of the refractive index sensor device on which the p-contacts are located is called the refractive index sensor device's p-contact-side and, correspondingly, that side of the refractive index sensor device on which the n-contacts are located is called the refractive index sensor device's n-contact-side. The refractive index sensor device's p-contact-side thus lies opposite to the refractive index sensor device's n-contact-side.

Preferably, the p-contacts and the n-contacts are arranged on top of the p-type semiconductor stripes and n-type semiconductor stripes, respectively, along the stacking direction of layers of the refractive index sensor device.

Preferably, on top each of the PIN-diode stripes, a respective Si-contact layer stripe is arranged along the stacking direction. Preferably, the Si-contact layer stripes at least partly cover the p-type semiconductor stripe, the intrinsic semiconductor material stripe and the n-type semiconductor stripe of the PIN-diode stripes. The Si-contact layer stripe can thus be arranged such that on top of each of the PIN-diode stripes along the stacking direction, a respective Si-contact layer stripe is arranged.

Preferably, n-contacts and/or p-contacts are formed within or embedded into the Si-contact layer stripes to directly contact the p-type semiconductor stripes and/or n-type semiconductor stripes of respective PIN-diode stripes, respectively.

It is beneficial that the p-contacts and n-contacts are made of a Si-Co-alloy and are embedded into respective Si-contact layer stripes that are arranged on top of the PIN-diode stripes, respectively, along the stacking direction.

Preferably, the p-contacts and n-contacts are configured as ohmic contacts.

For fabricating the ohmic contacts made of a Si-Co-alloy, first a Si-contact layer stripe is fabricated on top of the sensor layer along the stacking direction.

Preferably, the p-contacts and n-contacts are formed in the Si-contact layer stripe using self-aligned silicidation. To ensure that p-contacts and n-contacts are only formed at selected areas, those parts where no p-contact or n-contact is supposed to be present are covered and thereby protected by a protection-layer stripe, e.g., that is made of SiN.

For example, to selectively fabricating the p-contacts and n-contacts, initially, a protection-layer stripe can be arranged on top of the PIN-diode stripe. The protection-layer stripe may be designed, e.g. using lithography, to leave those parts where the p-contacts and n-contacts are to be formed uncovered. Those parts of the PIN-diode stripes that are covered by the protection-layer stripes are thus protected from self-aligned silicidation. The protection-layer stripe will be described in more detail below.

Alternatively, ohmic p-contacts and n-contacts made, e.g., of Co, only, could be directly arranged at the ends of the p-type semiconductor stripes and the n-type semiconductor stripes, respectively.

Preferably, each of the PIN-diode stripes is arranged on top of a respective Si-substrate layer stripe along the stacking direction. Preferably, the Si-substrate layer stripes with respective PIN-diode stripes arranged on top of them are electrically and spatially separated from each other by the insulating material of the sensor layer. A Si-substrate layer stripe is particularly preferred for integrating the refractive index sensor device into the silicon-based CMOS/BiCMOS-technology.

The nanohole array preferably has a thickness measured along the stacking direction of the refractive index sensor device of equal or less than 300 nm, e.g., between 300 nm and 50 nm, more preferably equal or less than 250 nm, more preferably between 200 nm and 20 nm, for example 40 nm or 80 nm.

The feedthroughs of the nanohole array preferably form a lattice with a lattice spacing of 0.5 µm to 1.2 µm, e.g., 0.5 µm to 0.9 µm. The feedthroughs can have a diameter between 300 nm to 800 nm, in particular between 500 nm and 700 nm, more preferably between 600 nm and 700 nm. A lattice with feedthroughs having the above-mentioned dimension is particularly suitable for filtering a transmission wavelength in the range of 400 nm to 1600 nm, in particular of 1.55 µm used for long-distance optical data transmission.

The plate-shaped element of the nanohole array is made of titanium nitride (TiN) or Al or gold (Au) or of copper (Cu) or of a combination, e.g., an alloy or layer stack, thereof.

Of these materials, TiN and Al are particularly preferred since they are compatible with CMOS/BiCMOS-technology. In addition, using TiN or Al, the nanohole array can be fabricated with a comparatively low surface roughness of less than 4 nm, or, in particular in case of TiN with a surface roughness of less than 1.5 nm. TiN and Al are also expected to enable a comparatively high transmission of light in the preferred wavelength range from 400 nm to 1600 nm. Furthermore, in particular TiN shows a comparatively stable chemical behaviour and allows to detect changes in the local refractive index with the refractive index sensor device with high sensitivity, e.g., in comparison to Al.

The outer surface of the nanohole array's plate-shaped element that in operation is directly exposed to incoming light, i.e. the surface of the nanohole array's plate-shaped element that faces away from the sensor layer, can be surface functionalized. It is also possible that at least a part the outer surface of the refractive index sensor device in the stacking direction is provided with a surface functionalisation providing receptors for a specific analyte.

For example, properties of this outer surface of the plate-shaped element can be altered by means of surface functionalization in that functional groups are introduced to that surface. Thereby a biosensor is realized and the functional groups act as an affinity receptor that is configured for binding to a specific analyte, e.g., providing an antibody-antigen interaction or an enzymatic interaction. In binding an analyte, the local refractive index above the outer surface of the nanohole array is changed which leads to a change in the filtering properties of the nanohole array. This change in the filtering properties of the nanohole array can be observed in a photo current induced by the light traversing the nanohole array's feedthroughs and being absorbed in the sensor layer.

In case the outer surface of the plate-shaped element is coated with a specific functional group, it is generally *a priori* known to which analyte that functional group is able to bind. It is thus clear when observing a change in the local refractive index that an analyte that can bind to the specific functional group is actually present in a sample to which the refractive index sensor device is exposed. An analyte can be for example a bacterium, a virus, or a fungus, e.g., in water.

However, the refractive index sensor device may also be used without surface functionalization. In this case, the refractive index sensor device is exposed to a sample, e.g., a gaseous or liquid fluid, such that light impinging onto the refractive index sensor device traverses the sample. Due to the presence of the sample, the local refractive index may change which can be detected with the refractive index sensor device. To obtain which analyte is present in the sample, the measured photo current can be compared to an a *priori* available calibration measurement performed for various different analytes.

It is also possible to calibrate the refractive index sensor device to a reference curve without being specific to a particular analyte. For example, a measured photo current can be compared to a reference curve, e.g., for determining a level of pollution in lubricating oil. The reference curve can be obtained, e.g., via simulations of the expected result.

The refractive index sensor device can have a rectangular base area or, e.g., a round or polygonal base area. Preferably, the refractive index sensor device has a quadratic base area with a length between 10 µm and 80 µm, preferably between 20 µm and 60 µm, for example with a length of 40 µm.

The refractive index sensor device can further comprise an insulating material layer that is arranged between the sensor layer and the nanohole array, the insulating material layer being preferably made of a nitride such as silicon nitride (SiN) and/or of an oxide such as silicon dioxide (SiO₂). The insulating material layer serves the purpose of preventing or at least reducing corrosion of the semiconductor material of the sensor layer.

Preferably, the refractive index sensor device further comprises a protection-layer stripe that is arranged between the intrinsic semiconductor material stripe of a respective one of the PIN-diode stripes and the nanohole array. The protection-layer stripe, preferably, is made of or comprises a nitride such as SiN and/or is made of or comprises an oxide such as SiO₂. The protection-layer stripe preferably has a thickness of equal to or less than 300 nm, more preferably equal to or less than 250 nm, e.g., a thickness of 200 nm.

The protection-layer stripe can be fabricated by first growing a layer and then applying a lithographic mask to this layer to define the protection-layer stripes. After etching, these protection-layer stripes are arranged such that they are arranged on top of respective PIN-diode stripes and in particular on top of the intrinsic semiconductor material stripe of these PIN-diode stripes.

Accordingly, it is preferred that between each intrinsic semiconductor material stripe of the PIN-diode stripes and the nanohole array a respective protection-layer stripe is arranged.

The protection-layer stripes, preferably, are arranged and configured to prevent a short circuit between a p-type semiconductor stripe and an n-type semiconductor stripe of a respective PIN-diode stripe. The protection-layer stripes may also be used to define those areas where p-contacts or n-contacts shall be formed on top of the p-type semiconductor stripe or n-type semiconductor stripe, respectively. This is accomplished with the protection-layer stripes by covering those parts on the PIN-diode stripes where no p-contacts or n-contacts are to be formed and leaving those parts on the PIN-diode stripes uncovered where p-contacts or n-contacts are to be formed. By covering the PIN-diode stripes, the protection-layer stripes prevent the Si-contact layer from being silicided.

Preferably, the protection-layer stripes are embedded into the insulating material layer such as SiO₂-layer that is separating the protection-layer stripes from the nanohole array thereby providing a plane and comparatively smooth interface between the insulating material layer and the nanohole array.

If no protection-layer stripes are present in the refractive index sensor device, preferably, the insulating material layer is arranged between the PIN-diode stripes and the nanohole array.

Arranging the insulating material layer between the sensor layer and the nanohole array has the advantage that the nanohole array can be fabricated with comparatively high structural quality, e.g., in terms of a low surface roughness of, e.g., equal or less than 5 nm, preferably equal or less than 4 nm, more preferably equal or less than 1.5 nm.

It is particularly preferred that the refractive index sensor device comprises a plurality of SiN-protection-layer stripes on top of the PIN-diode stripes, respectively, and a SiO₂-insulating material layer that is arranged on top of and between the SiN-protection-layer stripes along the stacking direction. In this case, the nanohole array is preferably arranged on top of the SiO₂-insulating material layer along the stacking direction of the refractive index sensor device.

With respect to the fabrication method, the above-mentioned objective is achieved by a method of fabricating a refractive index sensor device according to claim 13, the method comprising:
- fabricating a sensor layer comprising a number of PIN-diode stripes, preferably, at least two PIN-diode stripes, and an insulating material, wherein each of the PIN-diode stripes is formed by a p-type semiconductor stripe, an intrinsic semiconductor material stripe and an n-type semiconductor stripe, and wherein the sensor layer is fabricated such that the PIN-diode stripes run parallel to each other within the sensor layer along an in-plane direction that is perpendicular to a stacking direction of layers of the refractive index sensor device, and such that said PIN-diode stripes are electrically and spatially separated from each other by the insulating material, and such that in each of the PIN-diode stripes the p-type semiconductor stripe, the intrinsic semiconductor material stripe and the n-type semiconductor stripe are arranged next to each other perpendicular to the stacking direction, and
- fabricating a nanohole array on top of the sensor layer along said stacking direction, wherein said nanohole array is formed using a plate-shaped element having a number of feedthroughs extending through said plate-shaped element and running parallel to the stacking direction, and wherein said feedthroughs are configured such that impinging light can travel through the feedthroughs, the nanohole array being configured such that light impinging on the nanohole array induces surface plasmon polaritons in the nanohole array.

With the method of fabricating a refractive index sensor device according to the invention, the above-described refractive index sensor device can be fabricated.

In case the PIN-diode stripes are made of Ge, for p-doping of Ge for example boron (B) can be used. For n-doping of Ge, phosphorus (P), arsenic (As) or antimony (Sb) can be employed.

For fabricating a PIN-diode stripe, for example, initially, a well can be etched into an insulating material matrix, e.g., a buried oxide (BOX), the well having a depth of, e.g., 600 nm and a width of 1 µm to 10 µm. Preferably, a Si-substrate layer is embedded into the insulating material matrix which forms a stop for the etching process and thus defines the depth for the etching of the well.

Afterwards, the well is epitaxial filled with a single crystalline semiconductor material such as single crystalline Ge. Alternatively to Ge, other semiconductor materials such as at least one of GeSn, SiGeSn and InP can be used. In fact, preferably, the PIN-diode stripes comprise at least one of Ge, GeSn, SiGeSn and InP.

Using lithographic masks, parts of the initially intrinsic semiconductor material such as intrinsic Ge can be selectively doped, e.g., by implanting respective dopant atoms into the semiconductor material. Thereby, the p-type semiconductor stripes and n-type semiconductor stripes can be fabricated. The stripes between the p-type semiconductor stripes and n-type semiconductor stripes are not further modified such that they form the intrinsic semiconductor material stripes of the PIN-diode stripes.

The nanohole array can be fabricated using lithographic techniques. For the transmission properties of the nanohole array, the spacing between feedthroughs, the diameter of the feedthroughs and the cross-sectional shape of the feedthroughs can be important. Preferably, the cross-sectional shape of the feedthroughs is circular. However, it may be possible to further reduce the full width at half maximum (FWHM) of the transmission peak at the resonance wavelength when using feedthroughs having a hexagonal cross-sectional shape.

In addition, planarity of the outer surface of the nanohole array along the stacking direction as well as the surface roughness of the nanohole array may affect the transmission properties of the nanohole array. Preferred materials for the nanohole array are TiN due to its expected low surface roughness of below 2 nm as well as Al due to its expected low absorption properties of light in the wavelength range from 400 nm to 1600 nm and also Au or Co.

In particular, TiN is also a comparatively chemically stable material. The nanohole array's plate-shaped element can be fabricated using sputtering techniques. After fabricating the plate-shaped element using lithography, the grating comprised of feedthroughs is fabricated into the plate-shaped element to form the nanohole array. The diameter of the feedthroughs can be, e.g., in the range of 325 nm to 765 nm and/or the lattice constant of the grating can range, e.g., from 500 nm to 900 nm.

With respect to the detection method, the above-mentioned objective is achieved by a method for detecting an analyte according to claim 14, the method comprising the steps of:
- providing a refractive index sensor according to the invention,
- directing light at a wavelength of between 400 nm and 1600 nm, e.g., of 1.55 µm, onto the nanohole array of the refractive index sensor device such that said light travels through the feedthroughs to reach the sensor layer,
- detecting a photo current present in the sensor layer that is induced by absorbing the impinging light in the sensor layer,
- exposing the refractive index sensor device to a liquid or gaseous fluid,
- determining a variation of an local refractive index associated with the liquid or gaseous fluid based on the detected photo current, and
- identifying whether a particular analyte is present in said liquid or gaseous fluid based on the determined variation of the local refractive index.

The variation or change of the refractive index of the liquid or gaseous fluid due to the presence of the analyte in the liquid or gaseous fluid can thus be detected in the photo current induced by the impinging light.

A change of refractive index of the liquid or gaseous fluid due to the presence of the analyte in the liquid or gaseous fluid may cause a change in the resonance frequency of the nanohole array and thus in the filtering properties of the nanohole array. This change in the filtering properties translates via the impinging light into a change in the photo current induced by the absorbed light after having traversed the liquid or gaseous fluid.

It is an advantage of the method for detecting an analyte according to the invention that no spectrometer is needed and no further complex spectrometer signal processing is required to detect a presence of an analyte. The information on the presence of the analyte can be directly obtained based on the measured photo current.

In particular, the presence of the analyte in the liquid or gaseous fluid can be detected by comparing the detected photo current or a quantity derived therefrom, e.g., the optical responsivity, to a calibration or reference measurement.

The liquid or gaseous fluid can be located directly in contact with the nanohole array or can be arranged at a distance from the nanohole array, e.g., from 10 nm to 50 nm above the nanohole array seen along the stacking direction of the refractive index sensor device. However, it is preferred that the liquid or gaseous fluid is brought into direct contact with the refractive index sensor device and in particular with its nanohole array. A situation in which the sample is not in direct contact with the nanohole array may occur when the nanohole array is covered with an encapsulation layer, e.g., for preventing corrosion of the nanohole array.

The order of the above-defined method steps can also be altered. For example, it is possible to expose the refractive index sensor device first to the liquid or gaseous fluid and afterwards light is directed onto the nanohole array thereby traversing liquid or gaseous fluid. Preferably, the light is directed perpendicularly onto the refractive index sensor device. However, it is also possible to direct light onto the nanohole array under an angle that is, e.g., between 20° and 90° with respect to the outer surface of the nanohole array.

The liquid or gaseous fluid preferably comprises the analyte such as a bacterium, a virus or a fungus. The analyte can be solved in water to form the liquid fluid. For example, the refractive index sensor device may be used to detect a virus species or a bacterium species in water, e.g., in drinking water.

The refractive index sensor device may be used to detect an analyte that is a volatile organic substance, e.g., for monitoring plant stocks to detect plant diseases such as a fungus species.

The liquid fluid can also be comprised of two or more components, which are mixed. For example, the liquid fluid can be a cooling lubricant comprised of water and oil. With the refractive index sensor device, it may be possible to determine the proportion of the respective components in the liquid fluid such as of water in, e.g., a cooling lubricant.

For example, the refractive index sensor device may be used to detect in real-time the proportion of water in a cooling lubricant used for cooling a machine or an industrial plant.

Due to the nanohole array being positioned between the light source and the sensor layer, light is filtered by the nanohole array such that substantially only light at the resonance wavelength of the nanohole array reaches the sensor layer to get absorbed therein. The light profile of the light after having traversed the nanohole array thus shows a comparatively sharp peak at the resonance wavelength.

This resonance peak of the light translates to a peak in the optical responsivity. The optical responsivity is defined as the ratio of the detected photo current and an incident optical power as a function of the wavelength. This peak in the optical responsivity may change its properties, e.g., peak intensity or peak position as a function of the wavelength in dependence on a change or variation of the local refractive index of the liquid or gaseous fluid to which the refractive index sensor device is exposed.

In the method for detecting an analyte, the variation or change of the local refractive index can be determined based on a displacement of a signal maximum peak of derived optical responsivity.

Alternatively or additionally, in the method for detecting an analyte, the variation or change of the local refractive index can be determined based a change of the intensity of a signal maximum peak of the optical responsivity derived from the detected photo current induced by impinging light at a fixed wavelength.

As a measure of a displacement of a signal maximum peak of derived optical responsivity, the sensitivity defined as S_{λ}=Δλᵣₑₛ/Δn in units of nm/RIU (refractive index unit) can be employed with Δλᵣₑₛ representing the displacement of resonance peak in terms of wavelength and Δn being the variation of the refractive index.

If the refractive index sensor device is used in combination with a light source emitting light at a fixed wavelength, also the figure of merit (FOM*) defined as FOM*=(ΔR_{λ}/Δn)/ΔR_{λ} may be used with R_{λ} being the optical responsivity as defined above.

With the refractive index sensor device according to the invention, sensitivities greater than 500 nm/RIU or even greater 1000 nm/RIU may be achieved.

The method of detecting an analyte can combined with dielectrophoresis. Accordingly, in the method it may be further included applying an AC-signal to the nanohole array. Thereby, an electric field can be induced for manipulating the analyte or other components of the liquid or gaseous fluid. This allows, e.g., a separation of components of the liquid or gaseous fluid to improve the detection capabilities of detecting the analyte with the refractive index sensor device.

In the method of detecting an analyte, it may be implemented to apply a bias voltage to the nanohole array to improve the limit of detection of the refractive index sensor device.

In the method of detecting an analyte it is particularly preferred that the analyte is a bacterium, a virus or a fungi and the fluid is preferably water.

In the method of detecting an analyte, it can be beneficial if the outer surface of the nanohole array along the stacking direction of layers of the refractive index sensor device is manipulated by means of surface functionalization. Thereby, it is possible to tailor the use of the refractive index sensor device to detect a presence of an analyte that is known to bind to receptors coated onto the outer surface of the nanohole array.

Accordingly, in method of detecting an analyte it is preferred that the analyte is a molecule and wherein an outer surface of the refractive index sensor device along the stacking direction is modified using surface functionalization that is configured for detecting a presence of said molecule.

Preferred embodiments of the invention will now be described with reference to the figures. Of these figures:
- Fig. 1:: shows a refractive index sensor device comprising a sensor layer and a nanohole array in a longitudinal sectional view;
- Fig. 2:: shows a cut through a refractive index sensor device taken such that the sensor layer is visible in a top view;
- Fig. 3:: shows a refractive index sensor device comprising a sensor layer and a nanohole array in a top view;
- Fig. 4:: shows a part of a refractive index sensor device in a cut taken along the stacking direction at a position where a PIN-diode stripe is present;
- Fig. 5:: shows a part of a refractive index sensor device in a cut taken along the stacking direction at a position where a PIN-diode stripe is present as well as an n-contact electrically contacting the n-type semiconductor stripe of the PIN-diode stripe;
- Fig. 6:: shows a part of a refractive index sensor device in a cut taken along the stacking direction at a position where a PIN-diode stripe is present as well as a p-contact electrically contacting the p-type semiconductor stripe of the PIN-diode stripe;
- Fig. 7:: shows a flow diagram representing a method of fabricating a refractive index sensor device; and
- Fig. 8:: shows a flow diagram representing a method of detecting an analyte.

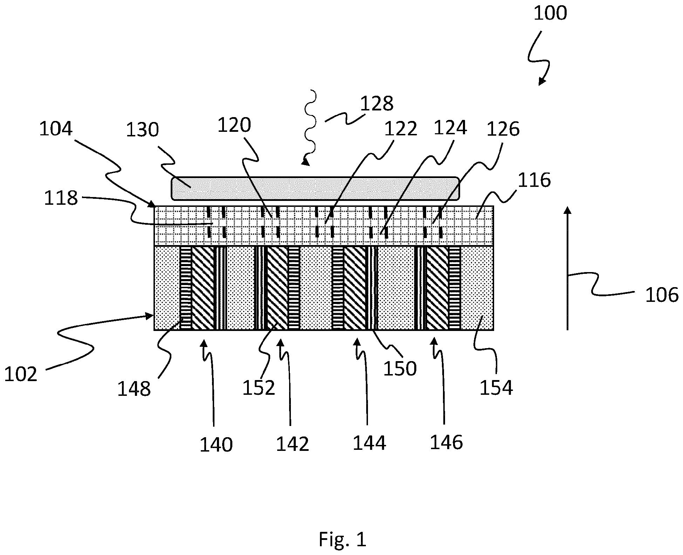

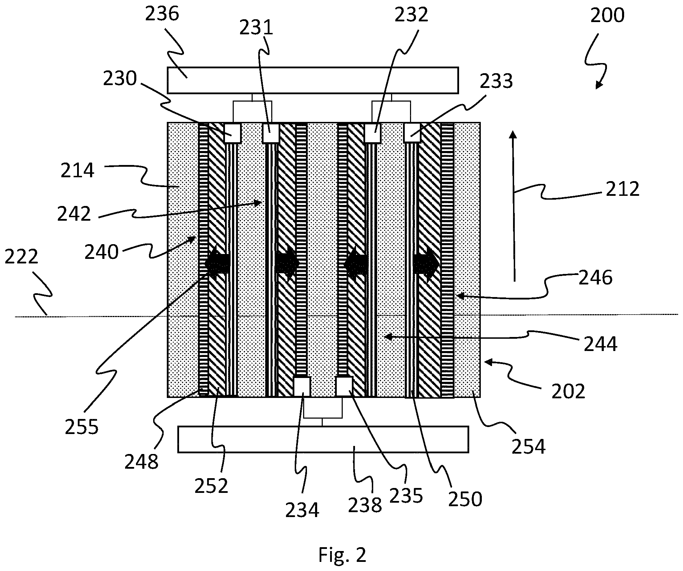

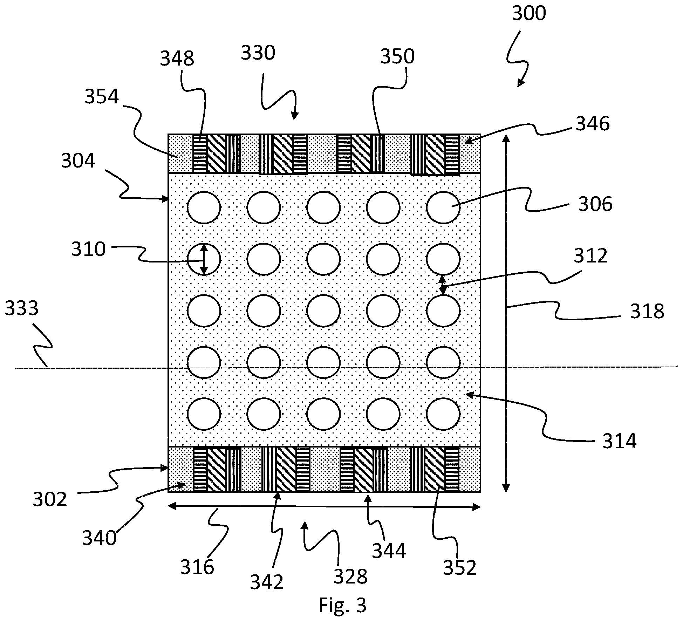

Figure 1 shows a refractive index sensor device 100 comprising a sensor layer 102 and a nanohole array 104 in a longitudinal sectional view. The longitudinal sectional view corresponds to a cut along the stacking direction 106 at a position as indicated, e.g., by line 222 in Fig. 2 and line 333 in Fig. 3.

The sensor layer 102 comprises a number of PIN-diode stripes 140, 142, 144, 146 and an insulating material 154. Of course, a different number of PIN-diode stripes as exemplary shown in Fig. 1 can be present. In particular, more than four PIN-diode stripes are preferably present.

Each of the of PIN-diode stripes 140, 142, 144, 146 has a p-type semiconductor stripe 148, an n-type semiconductor stripe 150 that are separated by an intrinsic semiconductor material stripe 152. P-type semiconductor stripes 148, n-type semiconductor stripes 150 and intrinsic semiconductor material stripes 152 can be made of Ge. Neighboring PIN-diode stripes 140, 142, 144, 146 are configured to have the p-type semiconductor stripes 148 facing each other. Accordingly, also the n-type semiconductor stripes 150 of two adjacent of PIN-diode stripes 140, 142, 144, 146 face each other. The PIN-diode stripes 140, 142, 144, 146 are electrically and spatially separated by the insulating material 154 that can be SiO₂.

The nanohole array 104 is formed by a plate-shaped element 116 having a number of feedthroughs 118, 120, 122, 124, 126 extending through the plate-shaped element 116 and running parallel to the stacking direction 106.

When the refractive index sensor device 100 is exposed to light 128, the impinging light 128 is filtered by the nanohole array 104 such that the profile of the light 128 exhibits are sharp peak at the resonance wavelength. The impinging light 128 induces surface plasmon polaritons in the nanohole array 104. The optical properties are sensitive to the local refractive index above the nanohole array 104. If the local refractive index changes due to the presence of the analyte in the sample 130, also the resonance conditions for the transmission of light change. The thereby induced change modifies the resonance conditions, i.e. in the resonance wavelength of the nanohole array. In turn, the change in the resonance wavelength of the nanohole array modifies the filtering properties of the nanohole array 104.

Light 128 travelling through feedthroughs 118, 120, 122, 124, 126 is filtered by the nanohole array 104 such that only light at the resonance wavelength is transmitted through the nanohole array 104.

Light 128 traversing the nanohole array 104 can be absorbed in the sensor layer 102 where it induces a photo current in the PIN-diode stripes 140, 142, 144, 146.

Since the filtering properties of the nanohole array 104 change due to the presence of the analyte, also the profile of light 128 traversing the nanohole array 104 change. This change can be indicative of the presence of the analyte in sample 130.

A change in the profile of light 128 traversing the nanohole array 104 translates to a change in the photo current induced in the PIN-diode stripes 140, 142, 144, 146. Thus, by analysing a measured photo current, a presence of an analyte can be detected.

Figure 2 shows a top view of a refractive index sensor device 200 wherein all elements or layers above the sensor layer 202 except for n-contacts 230, 231, 232, 233, p-contact 234, 235 and main n-contact 236 and main p-contact 238 are not shown.

As in refractive index sensor device 100 described with reference to Fig. 1, the sensor layer 202 comprises a number of PIN-diode stripes 240, 242, 244, 246 and an insulating material 254 arranged between the PIN-diode stripes 240, 242, 244, 246. Of course, a different number of PIN-diode stripes as exemplary shown in Fig. 2 can be present. In particular, more than four PIN-diode stripes are preferably present.

The PIN-diode stripes 240, 242, 244, 246 run parallel to each other within the sensor layer 202 along an in-plane direction 212 that is vertical to a stacking direction of layers of the refractive index sensor device 200 (cf. direction 106 in Fig. 1).

Each of the of PIN-diode stripes 240, 242, 244, 246 has a p-type semiconductor stripe 248, an n-type semiconductor stripe 250 that are separated by an intrinsic semiconductor material stripe 252. Of these PIN-diode stripes 240, 242, 244, 246 respective p-type semiconductor stripes 248 and n-type semiconductor stripes 250 of neighboring PIN-diode stripes 240, 242, 244, 246 face each other. The order p-type semiconductor stripe 248 and n-type semiconductor stripe 250 is thus reversed in neighboring PIN-diode stripes 240, 242, 244, 246. Consequently, also the direction of a photo current 255 travelling from an n-type semiconductor stripe 250 to a p-type semiconductor stripe 248 is reversed in neighboring PIN-diode stripes 240, 242, 244, 246.

The n-contacts 230, 231, 232, 233 are arranged on top of respective n-type semiconductor stripes 250 along the stacking direction. The n-contacts 230, 231, 232, 233 are used for electrically connecting pairs of two adjacent n-type semiconductor stripes 250 of neighboring PIN-diode stripes 240, 242, 244, 246. In the present example, n-contacts 230, 231 connect the n-type semiconductor stripes 250 of PIN-diode stripes 240, 242. Furthermore, n-contacts 232, 233 connect the n-type semiconductor stripes 250 of PIN-diode stripes 244, 246.

Correspondingly, the p-contacts 234, 235 are arranged on top of respective p-type semi-conductor stripes 248 along the stacking direction. The p-contact 234, 235 electrically connect the two adjacent p-type semiconductor stripes 248 of the neighboring PIN-diode stripes 242, 244.

All charge carriers collected from the p-type semiconductor stripes 248 and n-type semi-conductor stripes 250 are transferred to a main p-contact 238 and a main n-contact 236, respectively. Accordingly, n-contacts 230, 231, 232, 233 are connected to main n-contact 236 and p-contacts 234, 235 are connected to main p-contact 238.

If more PIN-diode stripes would be present, accordingly more n-contacts and p-contacts would be present to electrically connected neighboring PIN-diode stripes in the same manner as described for PIN-diode stripes 240, 242, 244, 246. All n-contacts would be connected to the same main-n-contact 236. Correspondingly, all p-contacts would be connected to the same main-p-contact 238.

Light impinging onto the refractive index sensor device 200 and being filtered by the nanohole array 204 can be absorbed in the sensor layer 202 thereby inducing a photo current 255 in the PIN-diode stripes 240, 242, 244, 246.

The photo current 255 travel can be tapped via main n-contact 236 and main p-contact 238, respectively.

The induced photo current 255 may be sensitive to changes in the local refractive index induced by the presence of an analyte in a sample to which the refractive index sensor device 200 is exposed. It is therefore possible to detect a presence of an analyte in a sample based on the photo current 255 induced by light absorbed in the sensor layer 202 after having traversed the sample and the nanohole array.

Figure 3 shows a refractive index sensor device 300 comprising a sensor layer 302 and a nanohole array 304 in a top view. Additional components such as p-contacts, main p-contact, n-contacts and main n-contact as described with reference to Fig.2 are not shown.

The nanohole array 304 comprises a lattice formed by a number of feedthroughs 306 formed within a plate-shaped element. The plate-shaped element of the nanohole array 304 is made of TiN, but may as an alternative be also made of Al or Au or Cu or of TiN, Al, Cu and/or Au. The feedthroughs 306 have a circular cross-section with a diameter of 500 nm. Alternatively, the feedthroughs' diameter 310 can be between 300 nm to 800 nm in particular of between 500 nm and 700 nm, more preferably between 600 nm and 700 nm. The lattice constant 312 of the lattice formed by the feedthroughs 306 is 0.7 µm, but may in alternative embodiments lie between 0.5 µm to 1.2 µm, e.g., 0.5 µm to 0.9 µm.

The outer surface 314 of the nanohole array 304 is modified using surface functionalization. Surface functionalization is accomplished using immobilized receptor molecules coating the outer surface 314. The immobilized receptor molecules are configured to bind to a specific analyte such as a virus or a bacterium. The refractive index sensor device 300 may thus be used for detecting a presence of that analyte that binds to the immobilized receptor molecules on the outer surface 314.

The refractive index sensor device 300 has a rectangular base area with a shorter length 316 being 40 µm and a longer length 318 being 60 µm.

In the direction of the longer length 318, the sensor layer 302 is larger than the nanohole array 304. Accordingly, parts of the sensor layer 302 are visible in a top view.

The sensor layer 302 comprises a number of PIN-diode stripes 340, 342, 344, 346. Of course, a different number of PIN-diode stripes as exemplary shown in Fig. 3 can be present. In particular, more than four PIN-diode stripes are preferably present. The sensor layer 302 further comprises an insulating material 354 arranged between the PIN-diode stripes 340, 342, 344, 346

Each PIN-diode stripes 340, 342, 344, 346 has a p-type semiconductor stripe 348, an n-type semiconductor stripe 350 that are separated by intrinsic semiconductor material stripe 352 as described with reference to Figs. 1 and 2.

At a p-contact side 328 of the refractive index sensor device 300, the p-type semiconductor stripes 348 of the PIN-diode stripes 340, 342, 344, 346 can be contacted using p-contacts. At an n-contact side 330 of the refractive index sensor device 300, the n-type semiconductor stripes 350 of the PIN-diode stripes 340, 342, 344, 346 can be contacted using p-contacts. With the p-contacts and n-contacts, a photo current can be tapped and analysed for detecting a presence of an analyte in a liquid or gaseous fluid to which the refractive index sensor device 300 is exposed.

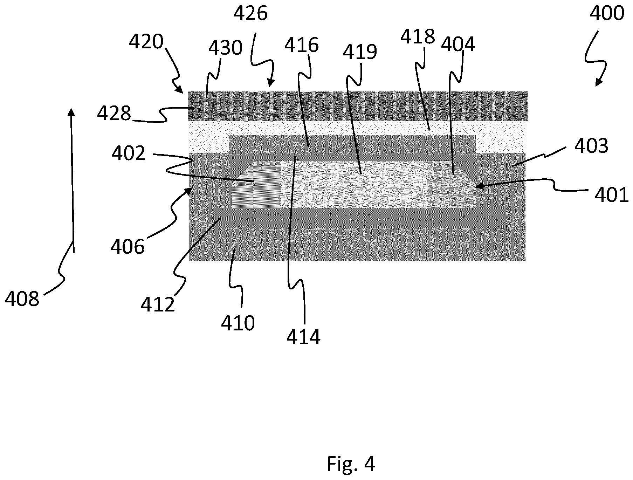

Figure 4 shows a part of a refractive index sensor device 400 in a cut taken along the stacking direction 408 at a position where a PIN-diode stripe 401 is present. The PIN-diode stripe is present 401 comprises an n-type semiconductor stripe 402 and a p-type semiconductor stripe 404 that are separated by an intrinsic semiconductor material stripe 419. The PIN-diode stripe 401 is made of Ge.

The refractive index sensor device 400 comprises in layers along the stacking direction 408 a BOX-layer 410, a Si-substrate layer stripe 412, a sensor layer 406 comprising the PIN-diode stripe 401 and an insulating material 403, a Si-contact layer stripe 414, a SiN-protection-layer stripe 416, a SiO₂-insulating material layer 418, and a nanohole array 420.

The refractive index sensor device 400 can be arranged in an oxide window of a lithographic mask, e.g., arranged on a silicon-on-insulator (SOI)-substrate.

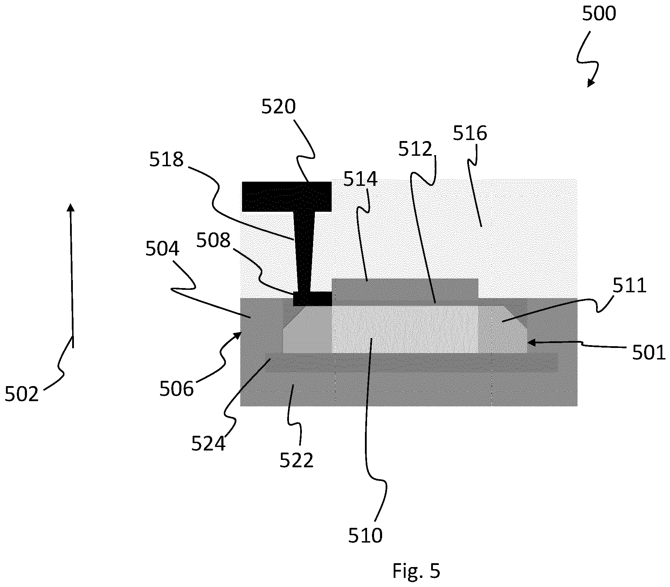

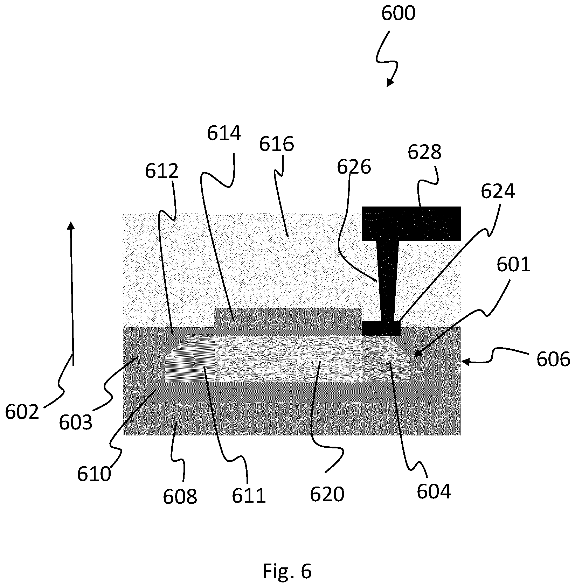

The Si-contact layer stripe 414 is on top of the PIN-diode stripe 401 is for implementing n-contacts and p-contacts as described with reference to Figs. 5 and 6.

The SiN-protection-layer stripe 416 is applied on top of the Si-contact layer stripe 414 and serves for preventing a short circuit between the n-type semiconductor stripe 402 and the p-type semiconductor stripe 404.

The SiO₂-insulating material layer 418 serves for fabricating the nanohole array 420 with high quality, i.e., with a planar outer surface 426 and a low surface roughness of below 4 nm.

Accordingly, on top of the SiO₂-insulating material layer 418, the nanohole array 420 is arranged. The nanohole array 420 is formed by a plate-shaped element 428, e.g., made of TiN, Al, Cu or Au. A plurality of feedthroughs 430 are formed within the plate-shaped element 428, which are aligned parallel to the stacking direction 408. The feedthroughs 430 form a grating that serves for filtering impinging light.

Figure 5 shows a part of a refractive index sensor device 500 in a cut taken along the stacking direction 502 at a position where a PIN-diode stripe 501 is present as well as an n-contact 508 electrically contacting the n-type semiconductor stripe of the PIN-diode stripe 501. In particular, the cut was taken at a position where no nanohole array is present.

PIN-diode stripe 501 further comprises a p-type semiconductor stripe 511 and an intrinsic semiconductor material stripe 510.

The n-contact 508 extends through a Si-contact layer 512 that is arranged on top of the sensor layer 506 in the stacking direction 502. Further, on top of the Si-contact layer 512, a SiN-protection-layer stripe 514 is arranged to cover the intrinsic semiconductor material stripe 510 of the PIN-diode stripe 501.

Both, SiN-protection-layer stripe and n-contact 508 are covered by a SiO₂-insulatin material layer 516. Through the SiO₂-insulating material layer 516, a via 518 connects the n-contact 508 to an n-contact metallization 520. The n-contact metallization 520 electrically connects the n-contact 508 to an n-contact that is arranged on an n-type semiconductor stripe of a neighboring PIN-diode stripe of sensor layer 506.

The refractive index sensor device 500 comprises in layers in the direction of the stacking direction 502 of layers of the refractive index sensor device 500 a BOX-layer 522, a Si-substrate lay stripe 524, the sensor layer 506, the Si-contact layer 512, the SiN-protection-layer stripe 614, and the SiO₂-insulating material layer 516. Additionally to the PIN-diode stripe 501, the sensor layer 506 further comprises an insulating material 504 that spatially and electrically separates PIN-diode stripe 501 from neighboring PIN-diode stripes of sensor layer 506.

As described with reference to Fig. 6, on a p-contact side of refractive index sensor device 500, on the p-type semiconductor stripes 511 a p-contact is arranged.

Figure 6 shows a part of a refractive index sensor device 600 in a cut taken along the stacking direction 602 at a position where a PIN-diode stripe 601 is present as well as a p-contact 624 electrically contacting the p-type semiconductor stripe 604 of the PIN-diode stripe 601. In particular, no nanohole array is present at this position. PIN-diode stripe 601 further comprises an n-type semiconductor stripe 611 and an intrinsic semiconductor material stripe 620.

The refractive index sensor device 600 comprises in layers along the stacking direction 602 a BOX-layer 608, a Si-substrate layer stripe 610, the sensor layer 606, a Si-contact layer stripe 612, a SiN-protection-layer stripe 614 and a SiO₂-insulating material layer 616. The afore-mentioned layers can be configured as described with reference to Figs. 4 and 5.

In the sensor layer 606, PIN-diode stripes are spatially and electrically separated an insulating material 603.

The p-contact 624 is embedded into the Si-contact layer stripe 612 to directly contact the p-type semiconductor stripe 604 of the PIN-diode stripe 601.Charge carriers collected by the p-contact 624 are transferred using a via 626 to a p-contact metallization 628. The p-contact metallization 628 electrically connects the p-contact 624 to a p-contact that is arranged on a p-type semiconductor stripe of a neighboring PIN-diode stripe of sensor layer 606. The p-contact metallization 628 can also be in electrical contact with a main p-contact that collects charge carriers from all p-contacts of the refractive index sensor device 600.

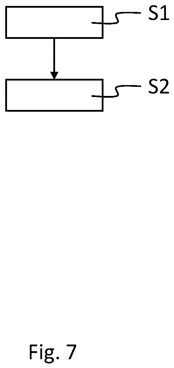

Figure 7 shows a flow diagram representing a method of fabricating a refractive index sensor device. With the method of fabricating a refractive index sensor device as described in the following, a refractive index sensor device as described with reference to Figs. 1 to 3 or Figs. 4 to 6 can be fabricated.

In the method, a sensor layer is fabricated (steps S1) comprising a number of PIN-diode stripes, preferably, at least two PIN-diode stripes, and an insulating material, wherein each of the PIN-diode stripes is formed by a p-type semiconductor stripe, an intrinsic semiconductor material stripe and a n-type semiconductor stripe. In particular, the sensor layer is fabricated such that the PIN-diode stripes run parallel to each other within the sensor layer along an in-plane direction that is vertical to a stacking direction of layers of the refractive index sensor device, and such that said PIN-diode stripes are electrically and spatially separated from each other by the insulating material.

The fabrication of the sensor layer may comprise that initially a well is etched into an insulating material matrix up to a Si-substrate layer stripe that serves as a stop for the etching process. The well is then filled epitaxially with an intrinsically doped semiconductor material, e.g., intrinsically doped Ge. Using lithography, this intrinsically doped semiconductor material in the well is selectively p-doped and n-doped to form the p-type semiconductor stripe and the n-type semiconductor stripe, respectively. Doping can be accomplished using implantation techniques such as ion implantation. Between the p-type semiconductor stripe and the n-type semiconductor stripe, the intrinsic semiconductor material stripe remains such that a PIN-diode stripe is formed.

The method further comprises fabricating a nanohole array (step S2) on top of the sensor layer along said stacking direction, wherein said nanohole array is formed using a plate-shaped element having a number of feedthroughs extending through said plate-shaped element and running parallel to the stacking direction, and wherein said feedthroughs are configured such that impinging light can travel through the feedthroughs.

Fabricating a nanohole array may comprise fabricating the nanohole array's plate-shaped element by means of sputtering. Using lithography, the grating of feedthroughs can be fabricated into the plate-shaped element by means of etching to form the nanohole array. By designing the mask, the lattice constant of the lattice as well as the diameter and shape of the feedthroughs may be defined. For example, instead of y circular cross-section, the feedthroughs may have a hexagonal cross-section, which may increase the sensitivity of the refractive index sensor device.

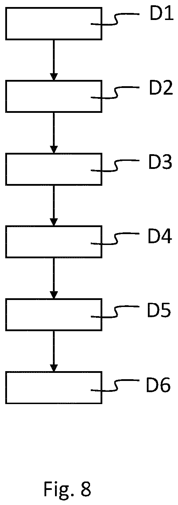

Figure 8 shows a flow diagram representing a method of detecting an analyte such as a virus, a bacterium or a fungus contained in a liquid or gaseous fluid.

For carrying out the method, a refractive index sensor device as described with reference to Figs. 1 to 3 or Figs. 4 to 6 can be employed.

In a first step (step D1), a refractive index sensor device is provided having a sensor layer comprising a number of PIN-diode stripes each of the PIN-diode stripes being formed by a p-type semiconductor stripe, an intrinsic semiconductor material stripe and a n-type semi-conductor stripe, and an insulating material.

The PIN-diode stripes run parallel to each other within the sensor layer along an in-plane direction that is vertical to a stacking direction of layers of the refractive index sensor device, said PIN-diode stripes being electrically and spatially separated from each other by the insulating material.

The refractive index sensor device further comprises a nanohole array arranged on top of the sensor layer along the stacking direction. The nanohole array is formed by a plate-shaped element having a number of feedthroughs extending through said plate-shaped element and running parallel to the stacking direction. The Feedthroughs are configured such that impinging light can travel through the feedthroughs to be absorbed in the sensor layer.

With a light source, light at a wavelength of between 400 nm and 1600 nm is directed onto the nanohole array of the refractive index sensor device (step D2) such that said light travels through the feedthroughs to reach the sensor layer. For example, a light source emitting light at a fixed light source can be used. Alternatively, a light source configured for tuning the emitted wavelength within a predefined wavelength range can be used.

The light impinging onto the refractive index sensor device is filtered by the feedthroughs forming a lattice such that substantially only light at a resonance wavelength is transmitted through the feedthroughs. As a result, the profile of the light shows a relatively sharp peak at the resonance wavelength.

The light traversing the feedthroughs can be absorbed by the sensor layer thereby inducing a photo current in the PIN-diode stripes (step D3).

The refractive index sensor device is exposed a liquid or gaseous fluid (step D4) containing an analyte. Light emitted by the light source travels through the liquid or gaseous fluid.

The light impinging onto the nanohole array induces surface plasmon polaritons in the nanohole array. The resonance conditions of the nanohole array and thus the resonance wavelength depend on the local refractive index above the nanohole array.

Since the local refractive index of the liquid or gaseous fluid is changed by the presence of the analyte, also the resonance conditions of the nanohole array and thereby the filtering properties of the nanohole array are changed.

This change in the filtering properties of the nanohole array translates to a change in the photo current induced in the PIN-diode stripes. The induced photo current is thus indirectly sensitive to a change in the local refractive index of the liquid or gaseous fluid caused by the presence of the analyte.

Based on the detected photo current, therefore a variation of a local refractive index associated with the liquid or gaseous fluid is determined (step D5).

For example, the variation of the local refractive index can be determined based on a displacement of a signal maximum peak of an optical responsivity that is derived from the detected photo current.

Alternatively or additionally, the variation or change of the local refractive index can be determined based a change of the intensity of a signal maximum peak of the optical responsivity. In this variant it is preferred that a light source is used that emits light at a fixed wavelength.

Based on the determined variation of the local refractive index it is then possible to identify whether a particular analyte is present in said liquid or gaseous fluid (step D6).

## Claims

1. A refractive index sensor device (100; 200; 300; 400; 500; 600) for detecting a presence of an analyte, the refractive index sensor device (100; 200; 300; 400; 500; 600) comprising
- a sensor layer (102; 202; 302; 406; 506; 606) comprising
- a number of PIN-diode stripes (140, 142, 144, 146; 240, 242, 244, 246; 340, 342, 344, 346; 401; 501; 601), each of the PIN-diode stripes (140, 142, 144, 146; 240, 242, 244, 246; 340, 342, 344, 346; 401; 501; 601) being formed by a p-type semiconductor stripe (148; 248; 348; 404; 511; 604), an intrinsic semiconductor material stripe (152; 252; 352; 419; 510; 620) and an n-type semi-conductor stripe (150; 250; 350; 402; 611), and
- an insulating material (154; 254; 354; 403; 504; 603),
wherein the PIN-diode stripes (140, 142, 144, 146; 240, 242, 244, 246; 340, 342, 344, 346; 401; 501; 601) run parallel to each other within the sensor layer (102; 202; 302; 406; 506; 606) along an in-plane direction (212) that is perpendicular to a stacking direction (106; 408; 502; 602) of layers of the refractive index sensor device (100; 200; 300; 400; 500; 600), said PIN-diode stripes (140, 142, 144, 146; 240, 242, 244, 246; 340, 342, 344, 346; 401; 501; 601) being electrically and spatially separated from each other by the insulating material (154; 254; 354; 403; 504; 603); and,
arranged on top of the sensor layer (102; 202; 302; 406; 506; 606) along the stacking direction (106; 408; 502; 602),
- a nanohole array (104; 304; 420) formed by a plate-shaped element (116; 428) having a number of feedthroughs (118, 120, 122, 124, 126; 306; 430) extending through said plate-shaped element (116; 428) and running parallel to the stacking direction (106; 408; 502; 602), said feedthroughs (118, 120, 122, 124, 126; 306; 430) being configured such that impinging light (128) can travel through the feedthroughs (118, 120, 122, 124, 126; 306; 430) to be absorbed in the sensor layer (102; 202; 302; 406; 506; 606), the nanohole array being configured such that light impinging on the nanohole array induces surface plasmon polaritons in the nanohole array,
- wherein in each of the PIN-diode stripes (140, 142, 144, 146; 240, 242, 244, 246; 340, 342, 344, 346; 401; 501; 601) the p-type semiconductor stripe (148; 248; 348; 404; 511; 604), the intrinsic semiconductor material stripe (152; 252; 352; 419; 510; 620) and the n-type semiconductor stripe (150; 250; 350; 402; 611) are arranged next to each other perpendicular to the stacking direction (106; 408; 502; 602).

2. The refractive index sensor device (100; 200; 300; 400; 500; 600) of claim 1, wherein in directly adjacent PIN-diode stripes (140, 142, 144, 146: 240, 242, 244, 246; 340, 342, 344, 346; 401; 501; 601), the positions of the respective p-type semiconductor stripes (148; 248; 348; 404; 511; 604) and n-type semi-conductor stripes (150; 250; 350; 402; 611) are reversed such that a p-type semi-conductor stripe (148; 248; 348; 404; 511; 604) of a PIN-diode stripe (140, 142, 144, 146; 240, 242, 244, 246; 340, 342, 344, 346; 401; 501; 601) faces a p-type semiconductor stripe (148; 248; 348; 404; 511; 604) of a neighboring PIN-diode stripe (140, 142, 144, 146; 240, 242, 244, 246; 340, 342, 344, 346; 401; 501; 601) and an n-type semiconductor stripe (150; 250; 350; 402; 611) of a PIN-diode stripe (140, 142, 144, 146; 240, 242, 244, 246; 340, 342, 344, 346; 401; 501; 601) faces an n-type semi-conductor stripe (150; 250; 350; 402; 611) of a neighboring of a PIN-diode stripe (140, 142, 144, 146; 240, 242, 244, 246; 340, 342, 344, 346; 401; 501; 601).

3. The refractive index sensor device (100; 200; 300; 400; 500; 600) of claim 2, wherein the respective p-type semiconductor stripes (148; 248; 348; 404; 511; 604) of two adjacent PIN-diode stripes (140, 142, 144, 146; 240, 242, 244, 246; 340, 342, 344, 346; 401; 501; 601) are electrically connected to each other via a p-contact (234, 235; 626) and/or wherein the respective n-type semiconductor stripes (150; 250; 350; 402; 611) of two adjacent PIN-diode stripes (140, 142, 144, 146; 240, 242, 244, 246; 340, 342, 344, 346; 401; 501; 601) are electrically connected to each other via an n-contact (230, 231, 232, 233; 508).

4. The refractive index sensor device (100; 200; 300; 400; 500; 600) of claim 3, wherein the number of p-contacts (234, 235; 626) each electrically connecting the p-type semiconductor stripes (148; 248; 348; 404; 511; 604) of two adjacent PIN-diode stripes (140, 142, 144, 146; 240, 242, 244, 246; 340, 342, 344, 346; 401; 501; 601) are in electrical contact with a main p-contact (238) and/or wherein the number of n-contacts (230, 231, 232, 233; 508) each electrically connecting the n-type semiconductor stripes (150; 250; 350; 402; 611) of two adjacent PIN-diode stripes (140, 142, 144, 146; 240, 242, 244, 246; 340, 342, 344, 346; 401; 501; 601) are in electrical contact with a main n-contact (236).

5. The refractive index sensor device (100; 200; 300; 400; 500; 600) of one of claims 3 or 4. wherein the p-contacts (234, 235; 626) are located at a p-contact-side of the refractive index sensor device (100; 200; 300; 400; 500; 600) and/or wherein the n-contacts (230, 231, 232, 233; 508) are located at an n-contact-side that is opposite to the refractive index sensor device's p-contact-side.

6. The refractive index sensor device (100; 200; 300; 400; 500; 600) of one of the preceding claims, wherein the insulating material (154; 254; 354; 403; 504; 603) comprises or is SiO₂ and/or wherein the PIN-diode stripes (140, 142, 144, 146; 240, 242, 244, 246; 340, 342, 344, 346; 401; 501; 601) comprise at least one of Ge, GeSn, SiGeSn and InP.

7. The refractive index sensor device (100; 200; 300; 400; 500; 600) of one of the preceding claims, further comprising a protection-layer stripe (416; 514; 614) that is arranged between the intrinsic semiconductor material stripe (152; 252; 352; 419; 510; 620) of a respective one of the PIN-diode stripes (140, 142, 144, 146; 240, 242, 244, 246; 340, 342, 344, 346; 401; 501; 601) and the nanohole array (104; 304; 420), the protection-layer stripe (416; 514; 614), preferably, being made of or comprising a nitride such as SiN and/or being made of or comprising an oxide such as SiO₂.

8. The refractive index sensor device (100; 200; 300; 400; 500; 600) of claim 7, wherein the protection-layer stripe (416; 514; 614) is embedded into an insulating material layer (418; 516; 616) such as SiO₂ that is separating the protection-layer stripe (416; 514; 614) from the nanohole array (104; 304; 420) thereby providing a plane interface between the insulating material layer (418; 516; 616) and the nanohole array (104; 304; 420).

9. The refractive index sensor device (100; 200; 300; 400; 500; 600) of one of the preceding claims, wherein each of the PIN-diode stripes (140, 142, 144, 146; 240, 242, 244, 246; 340, 342, 344, 346; 401; 501; 601) is arranged on top of a respective Si-substrate layer stripe (610) along the stacking direction (106; 408; 502; 602), wherein, preferably, the Si-substrate layer stripes with respective PIN-diode stripes (140, 142, 144, 146; 240, 242, 244, 246; 340, 342, 344, 346; 401; 501; 601) arranged on top of them are electrically and spatially separated from each other by the insulating material (154; 254; 354; 403; 504; 603) of the sensor layer (102; 202; 302; 406; 506; 606).

10. The refractive index sensor device (100; 200; 300; 400; 500; 600) of one of the preceding claims, wherein on top each of the PIN-diode stripes (140, 142, 144, 146; 240, 242, 244, 246; 340, 342, 344, 346; 401; 501; 601) a respective Si-contact layer stripe (414; 612) is arranged along the stacking direction (106; 408; 502; 602), the Si-contact layer stripes (414; 612) at least partially covering the p-type semiconductor stripe (148; 248; 348; 404; 511; 604), the intrinsic semiconductor material stripe (152; 252; 352; 419; 510; 620) and the n-type semiconductor stripe (150; 250; 350; 402; 611) of the PIN-diode stripes (140, 142, 144, 146; 240, 242, 244, 246; 340, 342, 344, 346; 401; 501; 601), respectively.

11. The refractive index sensor device (100; 200; 300; 400; 500; 600) of claim 10, wherein the n-contacts (230, 231, 232, 233; 508) and/or the p-contacts (234, 235; 626) are formed within or embedded into the Si-contact layer stripes (414; 612) to directly contact the p-type semiconductor stripes (148; 248; 348; 404; 511; 604) and/or the n-type semiconductor stripes (150; 250; 350; 402; 611) of respective PIN-diode stripes (140, 142, 144, 146; 240, 242, 244, 246; 340, 342, 344, 346; 401; 501; 601), respectively.

12. The refractive index sensor device (100; 200; 300; 400; 500; 600) of one of the preceding claims, wherein at least a part of an outer surface (314; 426) of the nanohole array (104; 304; 420) in the stacking direction (106; 408; 502; 602) is provided with a surface functionalization providing receptors configured for binding to a specific analyte.

13. A method of fabricating a refractive index sensor device (100; 200; 300; 400; 500; 600), the method comprising:
- fabricating a sensor layer (102; 202; 302; 406; 506; 606) comprising a number of PIN-diode stripes (140, 142, 144, 146; 240, 242, 244, 246; 340, 342, 344, 346; 401; 501; 601) and an insulating material (154; 254; 354; 403; 504; 603), wherein each of the PIN-diode stripes (140, 142, 144, 146; 240, 242, 244, 246; 340, 342, 344, 346; 401; 501; 601) is formed by a p-type semiconductor stripe (148; 248; 348; 404; 511; 604), an intrinsic semiconductor material stripe (152; 252; 352; 419; 510; 620) and an n-type semiconductor stripe (150; 250; 350; 402; 611), and wherein the sensor layer (102; 202; 302; 406; 506; 606) is fabricated such that the PIN-diode stripes (140, 142, 144, 146; 240, 242, 244, 246; 340, 342, 344, 346; 401; 501; 601) run parallel to each other within the sensor layer (102; 202; 302; 406; 506; 606) along an in-plane direction (212) that is perpendicular to a stacking direction (106; 408; 502; 602) of layers of the refractive index sensor device (100; 200; 300; 400; 500; 600), and such that said PIN-diode stripes (140, 142, 144, 146; 240, 242, 244, 246; 340, 342, 344, 346; 401; 501; 601) are electrically and spatially separated from each other by the insulating material (154; 254; 354; 403; 504; 603), and such that in each of the PIN-diode stripes (140, 142, 144, 146; 240, 242, 244, 246; 340, 342, 344, 346; 401; 501; 601) the p-type semiconductor stripe (148; 248; 348; 404; 511; 604), the intrinsic semiconductor material stripe (152; 252; 352; 419; 510; 620) and the n-type semiconductor stripe (150; 250; 350; 402; 611) are arranged next to each other perpendicular to the stacking direction (106; 408; 502; 602), and
- fabricating a nanohole array (104; 304; 420) on top of the sensor layer (102; 202; 302; 406; 506; 606) along said stacking direction (106; 408; 502; 602), wherein said nanohole array (104; 304; 420) is formed by a plate-shaped element (116; 428) having a number of feedthroughs (118, 120, 122, 124, 126; 306; 430) extending through said plate-shaped element (116; 428) and running parallel to the stacking direction (106; 408; 502; 602), and wherein said feedthroughs (118, 120, 122, 124, 126; 306; 430) are configured such that impinging light can travel through the feedthroughs (118, 120, 122, 124, 126; 306; 430), the nanohole array being configured such that light impinging on the nanohole array induces surface plasmon polaritons in the nanohole array.

14. A method for detecting an analyte, the method comprising the steps of:
- providing a refractive index sensor device (100; 200; 300; 400; 500; 600) of one of claims 1 to 12,
- directing light at a wavelength of between 400 nm and 1600 nm onto the nanohole array (104; 304; 420) of the refractive index sensor device (100; 200; 300; 400; 500; 600) such that said light travels through the feedthroughs (118, 120, 122, 124, 126; 306; 430) to reach the sensor layer (102; 202; 302; 406; 506; 606),
- detecting a photo current (255) present in the sensor layer (102; 202; 302; 406; 506; 606) that is induced by absorbing the impinging light in the sensor layer (102; 202; 302; 406; 506; 606),
- exposing the refractive index sensor device (100; 200; 300; 400; 500; 600) to a liquid or gaseous fluid,
- determining a variation of a local refractive index associated with the liquid or gaseous fluid based on the detected photo current (255), and
- identifying whether a particular analyte is present in said liquid or gaseous fluid based on the determined variation of the local refractive index.

## Patentansprüche

1. Brechungsindex-Sensorvorrichtung (100; 200; 300; 400; 500; 600) zum Nachweisen der Anwesenheit eines Analyten, wobei die Brechungsindex-Sensorvorrichtung (100; 200; 300; 400; 500; 600) aufweist
- eine Sensorschicht (102; 202; 302; 406; 506; 606) mit
- einer Anzahl von PIN-Dioden-Streifen (140, 142, 144, 146; 240, 242, 244, 246; 340, 342, 344, 346; 401; 501; 601), wobei jeder der PIN-Dioden-Streifen (140, 142, 144, 146; 240, 242, 244, 246; 340, 342, 344, 346; 401; 501; 601) durch einen p-Typ-Halbleiterstreifen (148; 248; 348; 404; 511; 604), einem intrinsischen Halbleiterstreifen (152; 252; 352; 419; 510; 620) und einen n-Typ-Halbleiterstreifen (150; 250; 350; 402; 611) gebildet wird, und
- einem Isoliermaterial (154; 254; 354; 403; 504; 603),
wobei die PIN-Dioden-Streifen (140, 142, 144, 146; 240, 242, 244, 246; 340, 342, 344, 346; 401; 501; 601) innerhalb der Sensorschicht (102; 202; 302; 406; 506; 606) parallel zueinander entlang einer in-plane-Richtung (212) verlaufen, die senkrecht zu einer Stapelrichtung (106; 408; 502; 602) von Schichten der Brechungsindexsensorvorrichtung (100; 200; 300; 400; 500; 600) ist, wobei die PIN-Dioden-Streifen (140, 142, 144, 146; 240, 242, 244, 246; 340, 342, 344, 346; 401; 501; 601) elektrisch und räumlich voneinander durch das Isoliermaterial (154; 254; 354; 403; 504; 603) getrennt sind; und,
auf der Sensorschicht (102; 202; 302; 406; 506; 606) entlang der Stapelrichtung (106; 408; 502; 602) angeordnet,
- eine Nanolochanordnung (104; 304; 420), die durch ein plattenförmiges Element (116; 428) mit einer Anzahl von sich durch das plattenförmige Element (116; 428) erstreckende und parallel zur Stapelrichtung (106; 408; 502; 602) verlaufende Durchführungen (118, 120, 122, 124, 126; 306; 430) gebildet wird, wobei die Durchführungen (118, 120, 122, 124, 126; 306; 430) so ausgebildet sind, dass auftreffendes Licht (128) durch die Durchführungen (118, 120, 122, 124, 126; 306; 430) gelangen kann, um in der Sensorschicht (102; 202; 302; 406; 506; 606) absorbiert zu werden, wobei die Nanolochanordnung so ausgebildet ist, dass Licht, das auf die Nanolochanordnung auftrifft, Oberflächenplasmonenpolaritonen in der Nanolochanordnung induziert,
- wobei in jedem der PIN-Dioden-Streifen (140, 142, 144, 146; 240, 242, 244, 246; 340, 342, 344, 346; 401; 501; 601) der p-Typ-Halbleiterstreifen (148; 248; 348; 404; 511; 604), der intrinsische Halbleitermaterialstreifen (152; 252; 352; 419; 510; 620) und der n-Typ-Halbleiterstreifen (150; 250; 350; 402; 611) nebeneinander senkrecht zu der Stapelrichtung (106; 408; 502; 602) angeordnet sind.

2. Brechungsindexsensorvorrichtung (100; 200; 300; 400; 500; 600) nach Anspruch 1, wobei in direkt benachbarten PIN-Dioden-Streifen (140, 142, 144, 146; 240, 242, 244, 246; 340, 342, 344, 346; 401; 501; 601) die Positionen der jeweiligen p-Halbleiterstreifen (148; 248; 348; 404; 511; 604) und der n-Typ-Halbleiterstreifen (150; 250; 350; 402; 611) so vertauscht sind, dass ein p-Typ-Halbleiterstreifen (148; 248; 348; 404; 511; 604) eines PIN-Dioden-Streifens (140, 142, 144, 146; 240, 242, 244, 246; 340, 342, 344, 346; 401; 501; 601) steht einem p-Typ-Halbleiterstreifen (148; 248; 348; 404; 511; 604) einem benachbarten PIN-Dioden-Streifen (140, 142, 144, 146; 240, 242, 244, 246; 340, 342, 344, 346; 401; 501; 601) zugewandt ist und ein n-Typ-Halbleiterstreifen (150; 250; 350; 402; 611) eines PIN-Dioden-Streifens (140, 142, 144, 146; 240, 242, 244, 246; 340, 342, 344, 346; 401; 501; 601) einem n-Typ-Halbleiterstreifen (150; 250; 350; 402; 611) eines benachbarten PIN-Dioden-Streifens (140, 142, 144, 146; 240, 242, 244, 246; 340, 342, 344, 346; 401; 501; 601) zugewandt ist.

3. Brechungsindex-Sensorvorrichtung (100; 200; 300; 400; 500; 600) nach Anspruch 2, wobei die jeweiligen p-Halbleiterstreifen (148; 248; 348; 404; 511; 604) zweier benachbarter PIN-Dioden-Streifen (140, 142, 144, 146; 240, 242, 244, 246; 340, 342, 344, 346; 401; 501; 601) über einen p-Kontakt (234, 235, 626) elektrisch miteinander verbunden sind und/oder wobei die jeweiligen n-Halbleiterstreifen (150; 250; 350; 402; 611) zweier benachbarter PIN-Dioden-Streifen (140, 142, 144, 146; 240, 242, 244, 246; 340, 342, 344, 346; 401; 501; 601) über einen n-Kontakt (230, 231, 232, 233; 508) elektrisch miteinander verbunden sind.

4. Brechungsindexsensorvorrichtung (100; 200; 300; 400; 500; 600) nach Anspruch 3, wobei die Anzahl der p-Kontakte (234, 235; 626), die jeweils die p-Halbleiterstreifen (148; 248; 348; 404; 511; 604) zweier benachbarter PIN-Dioden-Streifen (140, 142, 144, 146; 240, 242, 244, 246; 340, 342, 344, 346; 401; 501; 601) elektrisch miteinander verbinden, in Kontakt mit einem p-Hauptkontakt (238) sind und/oder wobei die Anzahl der n-Kontakte (230, 231, 232, 233; 508), die jeweils die n-Halbleiterstreifen (150; 250; 350; 402; 611) zweier benachbarter PIN-Dioden-Streifen (140, 142, 144, 146; 240, 242, 244, 246; 340, 342, 344, 346; 401; 501; 601) elektrisch miteinander verbinden, in Kontakt mit einem n-Hauptkontakt (236) sind.

5. Brechungsindexsensorvorrichtung (100; 200; 300; 400; 500; 600) nach einem der Ansprüche 3 oder 4, wobei die p-Kontakte (234, 235; 626) an einer p-Kontaktseite der Brechungsindexsensorvorrichtung (100; 200; 300; 400; 500; 600) angeordnet sind und/oder wobei die n-Kontakte (230, 231, 232, 233; 508) an einer n-Kontaktseite angeordnet sind, die der p-Kontaktseite der Brechungsindexsensorvorrichtung gegenüberliegt.

6. Brechungsindexsensorvorrichtung (100; 200; 300; 400; 500; 600) nach einem der vorstehenden Ansprüche, wobei das Isoliermaterial (154; 254; 354; 403; 504; 603) SiO₂ aufweist oder ist und/oder wobei die PIN-Dioden-Streifen (140, 142, 144, 146; 240, 242, 244, 246; 340, 342, 344, 346; 401; 501; 601) mindestens eines von Ge, GeSn, SiGeSn und InP aufweisen.

7. Brechungsindexsensorvorrichtung (100; 200; 300; 400; 500; 600) nach einem der vorstehenden Ansprüche, die weiterhin einen Schutzschichtstreifen (416; 514; 614) aufweist, der zwischen dem intrinsischen Halbleiterstreifen (152; 252; 352; 419; 510; 620) eines jeweiligen der PIN-Dioden-Streifen (140, 142, 144, 146; 240, 242, 244, 246; 340, 342, 344, 346; 401; 501; 601) und der Nanolochanordnung (104; 304; 420) angeordnet ist, wobei der Schutzschichtstreifen (416; 514; 614) vorzugsweise aus einem Nitrid wie SiN und/oder aus einem Oxid wie SiO₂ besteht oder dieses aufweist.

8. Brechungsindexsensorvorrichtung (100; 200; 300; 400; 500; 600) nach Anspruch 7, wobei der Schutzschichtstreifen (416; 514; 614) in eine Isoliermaterialschicht (418; 516; 616) wie SiO₂ eingebettet ist, die den Schutzschichtstreifen (416; 514; 614) von der Nanolochanordnung (104; 304; 420) trennt, wodurch eine ebene Grenzfläche zwischen der Isoliermaterialschicht (418; 516; 616) und der Nanolochanordnung (104; 304; 420) bereitgestellt wird.

9. Brechungsindexsensorvorrichtung (100; 200; 300; 400; 500; 600) nach einem der vorstehenden Ansprüche, wobei jeder der PIN-Dioden-Streifen (140, 142, 144, 146; 240, 242, 244, 246; 340, 342, 344, 346; 401; 501; 601) auf einem jeweiligen Si-Substratschichtstreifen (610) entlang der Stapelrichtung (106; 408; 502; 602) angeordnet ist, wobei vorzugsweise die Si-Substratschichtstreifen mit jeweils darauf angeordneten PIN-Dioden-Streifen (140, 142, 144, 146; 240, 242, 244, 246; 340, 342, 344, 346; 401; 501; 601) durch das Isoliermaterial (154; 254; 354; 403; 504; 603) der Sensorschicht (102; 202; 302; 406; 506; 606) elektrisch und räumlich voneinander getrennt sind.

10. Brechungsindexsensorvorrichtung (100; 200; 300; 400; 500; 600) nach einem der vorstehenden Ansprüche, wobei auf jedem der PIN-Dioden-Streifen (140, 142, 144, 146; 240, 242, 244, 246; 340, 342, 344, 346; 401; 501; 601) entlang der Stapelrichtung (106; 408; 502; 602) jeweils ein Si-Kontaktschichtstreifen (414; 612) angeordnet ist, wobei die Si-Kontaktschichtstreifen (414; 612) den p-Typ Halbleiterstreifen (148; 248; 348; 404; 511; 604), den intrinsischen Halbleiterstreifen (152; 252; 352; 419; 510; 620) und den n-Typ Halbleiterstreifen (150; 250; 350; 402; 611) der PIN-Dioden-Streifen (140, 142, 144, 146; 240, 242, 244, 246; 340, 342, 344, 346; 401; 501; 601) jeweils zumindest teilweise überdecken.

11. Brechungsindexsensorvorrichtung (100; 200; 300; 400; 500; 600) nach Anspruch 10, wobei die n-Kontakte (230, 231, 232, 233; 508) und/oder die p-Kontakte (234, 235; 626) innerhalb der Si-Kontaktschichtstreifen (414; 612) ausgebildet oder eingebettet sind, um die p-Typ Halbleiterstreifen (148; 248; 348; 404; 511; 604) und/oder die n-Typ Halbleiterstreifen (150; 250; 350; 402; 611) der jeweiligen PIN-Dioden-Streifen (140, 142, 144, 146; 240, 242, 244, 246; 340, 342, 344, 346; 401; 501; 601) direkt zu kontaktieren.

12. Brechungsindexsensorvorrichtung (100; 200; 300; 400; 500; 600) nach einem der vorstehenden Ansprüche, wobei mindestens ein Teil einer äußeren Oberfläche (314; 426) der Nanolochanordnung (104; 304; 420) in der Stapelrichtung (106; 408; 502; 602) mit einer Oberflächenfunktionalisierung versehen ist, die Rezeptoren bereitstellt, die zur Bindung an einen spezifischen Analyten ausgebildet sind.

13. Verfahren zur Herstellung einer Brechungsindexsensorvorrichtung (100; 200; 300; 400; 500; 600), wobei das Verfahren umfasst:
- Herstellen einer Sensorschicht (102; 202; 302; 406; 506; 606), die eine Anzahl von PIN-Dioden-Streifen (140, 142, 144, 146; 240, 242, 244, 246; 340, 342, 344, 346; 401; 501; 601) und ein Isoliermaterial (154; 254; 354; 403; 504; 603) aufweist, wobei jeder der PIN-Dioden-Streifen (140, 142, 144, 146; 240, 242, 244, 246; 340, 342, 344, 346; 401; 501; 601) durch einen p-Typ-Halbleiterstreifen (148; 248; 348; 404; 511; 604), einem intrinsischen Halbleiterstreifen (152; 252; 352; 419; 510; 620) und einem n-Typ-Halbleiterstreifen (150; 250; 350; 402; 611) gebildet ist, und wobei die Sensorschicht (102; 202; 302; 406; 506; 606) so hergestellt ist, dass die PIN-Dioden-Streifen (140, 142, 144, 146; 240, 242, 244, 246; 340, 342, 344, 346; 401; 501; 601) parallel zueinander innerhalb der Sensorschicht (102; 202; 302; 406; 506; 606) entlang einer in-plane Richtung (212), die senkrecht zu einer Stapelrichtung (106; 408; 502; 602) von Schichten der Brechungsindexsensorvorrichtung (100; 200; 300; 400; 500; 600) verläuft, und zwar so, dass die PIN-Dioden-Streifen (140, 142, 144, 146; 240, 242, 244, 246; 340, 342, 344, 346; 401; 501; 601) elektrisch und räumlich voneinander durch das Isoliermaterial (154; 254; 354; 403; 504; 603) getrennt sind, und zwar so, dass in jedem der PIN-Dioden-Streifen (140, 142, 144, 146; 240, 242, 244, 246; 340, 342, 344, 346; 401; 501; 601) der p-Typ-Halbleiterstreifen (148; 248; 348; 404; 511; 604), der Streifen aus intrinsischem Halbleitermaterial (152; 252; 352; 419; 510; 620) und der n-Typ-Halbleiterstreifen (150; 250; 350; 402; 611) senkrecht zu der Stapelrichtung (106; 408; 502; 602) nebeneinander angeordnet sind, und
- Herstellen einer Nanolochanordnung (104; 304; 420) auf der Oberseite der Sensorschicht (102; 202; 302; 406; 506; 606) entlang der Stapelrichtung (106; 408; 502; 602), wobei die Nanolochanordnung (104; 304; 420) durch ein plattenförmiges Element (116; 428) mit einer Anzahl von Durchführungen (118, 120, 122, 124, 126; 306; 430) gebildet ist, die sich durch das plattenförmige Element (116; 428) erstreckt und parallel zu der Stapelrichtung (106; 408; 502; 602) verläuft, und wobei die Durchführungen (118, 120, 122, 124, 126; 306; 430) so ausgebildet sind, dass auftreffendes Licht durch die Durchführungen (118, 120, 122, 124, 126; 306; 430) gelangen kann und die Nanolochanordnung so ausgebildet ist, dass auf die Nanolochanordnung auftreffendes Licht Oberflächenplasmonenpolaritonen in der Nanolochanordnung induziert.

14. Verfahren zum Nachweisen eines Analyten, wobei das Verfahren die folgenden Schritte umfasst:
- Bereitstellen einer Brechungsindexsensorvorrichtung (100; 200; 300; 400; 500; 600) nach einem der Ansprüche 1 bis 12,
- Richten von Licht mit einer Wellenlänge zwischen 400 nm und 1600 nm auf die Nanolochanordnung (104; 304; 420) der Brechungsindexsensorvorrichtung (100; 200; 300; 400; 500; 600), so dass das Licht durch die Durchführungen (118, 120, 122, 124, 126; 306; 430) gelangt und die Sensorschicht (102; 202; 302; 406; 506; 606) erreicht,
- Erfassen eines in der Sensorschicht (102; 202; 302; 406; 506; 606) vorhandenen Photostroms (255), der durch Absorption des auftreffenden Lichts in der Sensorschicht (102; 202; 302; 406; 506; 606) induziert wird,
- Aussetzen der Brechungsindexsensorvorrichtung (100; 200; 300; 400; 500; 600) gegenüber einem flüssigen oder gasförmigen Fluid,
- Bestimmen einer Variation eines lokalen Brechungsindexes, der mit dem flüssigen oder gasförmigen Fluid verbunden ist, basierend auf dem detektierten Photostrom (255), und
- Identifizieren, ob ein bestimmter Analyt in dem flüssigen oder gasförmigen Fluid vorhanden ist, basierend auf der ermittelten Veränderung des lokalen Brechungsindexes.

## Revendications

1. Dispositif formant capteur d'indice de réfraction (100 ; 200 ; 300 ; 400 ; 500 ; 600) pour détecter la présence d'un analyte, le dispositif formant capteur d'indice de réfraction (100 ; 200 ; 300 ; 400 ; 500 ; 600) comprenant
- une couche de capteur (102 ; 202 ; 302 ; 406 ; 506 ; 606) comprenant
un certain nombre de bandes de diodes PIN (140, 142, 144, 146 ; 240, 242, 244, 246 ; 340, 342, 344, 346 ; 401 ; 501 ; 601), chacune des bandes de diodes PIN (140, 142, 144, 146 ; 240, 242, 244, 246 ; 340, 342, 344, 346 ; 401; 501 ; 601) étant formés par une bande de semi-conducteur de type p (148; 248; 348 ; 404 ; 511 ; 604), une bande de matériau semi-conducteur intrinsèque (152; 252 ; 352 ; 419 ; 510 ; 620) et une bande de semi-conducteur de type n (150 ; 250; 350; 402 ; 611), et
un matériau isolant (154 ; 254 ; 354 ; 403 ; 504 ; 603), dans lequel les bandes de diodes PIN (140, 142, 144, 146 ; 240, 242, 244, 246; 340, 342, 344, 346 ; 401 ; 501 ; 601) s'étendent parallèlement les uns aux autres dans la couche de capteur (102 ; 202; 302 ; 406 ; 506 ; 606) le long d'une direction dans le plan (212) qui est perpendiculaire à une direction d'empilement (106 ; 408 ; 502 ; 602) de couches du dispositif formant capteur d'indice de réfraction (100 ; 200 ; 300 ; 400 ; 500 ; 600), lesdites bandes de diodes PIN (140, 142, 144, 146 ; 240, 242, 244, 246 ; 340, 342, 344, 346 ; 401; 501 ; 601) étant séparées électriquement et spatialement les unes des autres par le matériau isolant (154 ; 254 ; 354 ; 403 ; 504, 603) ; et,
disposé au-dessus de la couche de capteur (102 ; 202 ; 302 ; 406 ; 506 ; 606) le long de la direction d'empilement (106 ; 408 ; 502; 602),
- un réseau de nano-trous (104 ; 304 ; 420) formé par un élément en forme de plaque (116 ; 428) ayant un certain nombre de traversées (118, 120, 122, 124, 126; 306; 430) s'étendant à travers ledit élément en forme de plaque (116 ; 428) et s'étendant parallèlement à la direction d'empilement (106 ; 408 ; 502 ; 602), lesdites traversées (118, 120, 122, 124, 126 ; 306 ; 430) étant configurées de telle sorte que la lumière incidente (128) puisse traverser les traversées (118, 120, 122, 124, 126 ; 306 ; 430) afin d'être absorbée dans la couche de capteur (102 ; 202 ; 302 ; 406 ; 506 ; 606), le réseau de nano-trous étant configuré de telle sorte que la lumière incidente sur le réseau de nano-trous induit des polaritons de plasmons de surface dans le réseau de nano-trous,
- dans lequel dans chacune des bandes de diodes PIN (140, 142, 144, 146 ; 240, 242, 244, 246 ; 340, 342, 344, 346 ; 401 ; 501 ; 601) la bande de semi-conducteur de type p (148 ; 248 ; 348 ; 404 ; 511 ; 604), la bande de matériau semi-conducteur intrinsèque (152 ; 252 ; 352 ; 419 ; 510 ; 620) et la bande de semi-conducteur de type n (150 ; 250 ; 350 ; 402 ; 611) sont disposées l'une à côté de l'autre perpendiculairement à la direction d'empilement (106 ; 408 ; 502 ; 602).

2. Dispositif formant capteur d'indice de réfraction (100 ; 200 ; 300 ; 400 ; 500 ; 600) selon la revendication 1,
dans lequel dans les bandes de diodes PIN directement adjacentes (140, 142, 144, 146 ; 240, 242, 244, 246 ; 340, 342, 344, 346 ; 401 ; 501 ; 601), les positions des bandes de semi-conducteur de type p respectives (148 ; 248 ; 348 ; 404 ; 511, 604) et des bandes de semi-conducteur de type n (150 ; 250 ; 350 ; 402 ; 611) sont inversées de telle sorte qu'une bande de semi-conducteur de type p (148 ; 248 ; 348 ; 404 ; 511 ; 604) d'une bande de diodes PIN (140, 142, 144, 146 ; 240, 242, 244, 246 ; 340, 342, 344, 346 ; 401 ; 501 ; 601) fait face à une bande de semi-conducteur de type p (148 ; 248 ; 348 ; 404 ; 511 ; 604) d'une bande de diodes PIN voisine (140, 142, 144, 146 ; 240, 242, 244, 246 ; 340, 342, 344, 346 ; 401 ; 501 ; 601) et une bande de semi-conducteur de type n (150 ; 250 ; 350 ; 402 ; 611) d'une bande de diodes PIN (140, 142, 144, 146 ; 240, 242, 244, 246 ; 340, 342, 344, 346 ; 401 ; 501 ; 601) fait face à une bande de semi-conducteur de type n (150 ; 250 ; 350 ; 402 ; 611) d'une bande de diodes PIN voisine (140, 142, 144, 146 ; 240, 242, 244, 246 ; 340, 342, 344, 346 ; 401 ; 501 ; 601).

3. Dispositif formant capteur d'indice de réfraction (100 ; 200 ; 300 ; 400 ; 500 ; 600) selon la revendication 2, dans lequel les bandes de semi-conducteur de type p respectives (148 ; 248 ; 348 ; 404 ; 511 ; 604) de deux bandes de diodes PIN adjacentes (140, 142, 144, 146 ; 240, 242, 244, 246 ; 340, 342, 344, 346 ; 401 ; 501 ; 601) sont connectées électriquement l'une à l'autre via un contact-p (234, 235 ; 626) et/ou dans lequel les bandes de semi-conducteur de type n respectives (150 ; 250 ; 350; 402 ; 611) de deux bandes de diodes PIN adjacentes (140, 142, 144, 146 ; 240, 242, 244, 246 ; 340, 342, 344, 346 ; 401 ; 501 ; 601) sont connectées électriquement les unes aux autres via un contact-n (230, 231, 232, 233 ; 508).

4. Dispositif formant capteur d'indice de réfraction (100 ; 200 ; 300 ; 400 ; 500 ; 600) selon la revendication 3, dans lequel
le nombre de contacts-p (234, 235 ; 626) reliant chacun électriquement les bandes de semi-conducteur de type p (148 ; 248 ; 348 ; 404 ; 511 ; 604) de deux bandes de diodes PIN adjacentes (140, 142, 144, 146 ; 240, 242, 244, 246 ; 340, 342, 344, 346; 401 ; 501 ; 601) sont en contact électrique avec un contact-p principal (238) et/ou dans lequel le nombre de contacts-n (230, 231, 232, 233 ; 508) connectant électriquement chacun les bandes de semi-conducteur de type n (150 ; 250 ; 350 ; 402; 611) de deux bandes de diodes PIN adjacentes (140, 142, 144, 146 ; 240, 242, 244, 246 ; 340, 342, 344, 346 ; 401 ; 501, 601) sont en contact électrique avec un contact-n principal (236).

5. Dispositif formant capteur d'indice de réfraction (100 ; 200 ; 300 ; 400 ; 500 ; 600) selon l'une des revendications 3 ou 4, dans lequel
les contacts-p (234, 235 ; 626) sont situés sur un côté contact-p du dispositif formant capteur d'indice de réfraction (100 ; 200 ; 300 ; 400 ; 500 ; 600) et/ou dans lequel les contacts-n (230, 231, 232, 233 ; 508) sont situés sur un côté contact-n qui est opposé au côté contact-p du dispositif formant capteur d'indice de réfraction.

6. Dispositif formant capteur d'indice de réfraction (100 ; 200 ; 300 ; 400 ; 500 ; 600) selon l'une des revendications précédentes, dans lequel le matériau isolant (154 ; 254 ; 354 ; 403 ; 504 ; 603) comprend ou est du SiO₂ et/ou dans lequel les bandes de diodes PIN (140, 142, 144, 146 ; 240, 242, 244, 246 ; 340, 342, 344, 346 ; 401 ; 501 ; 601) comprennent au moins l'un parmi : Ge, GeSn, SiGeSn et InP.

7. Dispositif formant capteur d'indice de réfraction (100 ; 200 ; 300 ; 400 ; 500 ; 600) selon l'une des revendications précédentes, comprenant en outre une bande de couche de protection (416 ; 514 ; 614) qui est disposée entre la bande de matériau semi-conducteur intrinsèque (152 ; 252 ; 352 ; 419 ; 510 ; 620) d'une bande respective des bandes de diodes PIN (140, 142, 144, 146 ; 240, 242, 244, 246 ; 340, 342, 344, 346 ; 401 ; 501 ; 601) et le réseau de nano-trous (104 ; 304 ; 420), la bande de couche de protection (416 ; 514 ; 614), de préférence, étant constitué de ou comprenant un nitrure tel que SiN et/ou étant constitué de ou comprenant un oxyde tel que SiO₂.

8. Dispositif formant capteur d'indice de réfraction (100 ; 200 ; 300 ; 400 ; 500 ; 600) selon la revendication 7, dans lequel la bande de couche de protection (416; 514, 614) est intégrée dans une couche de matériau isolant (418 ; 516 ; 616) telle que SiO₂ qui sépare la bande de couche de protection (416 ; 514 ; 614) du réseau de nano-trous (104 ; 304 ; 420), fournissant ainsi une interface plane entre la couche de matériau isolant (418 ; 516 ; 616) et le réseau de nano-trous (104 ; 304 ; 420).

9. Dispositif formant capteur d'indice de réfraction (100 ; 200 ; 300 ; 400 ; 500 ; 600) selon l'une des revendications précédentes, dans lequel chacune des bandes de diodes PIN (140, 142, 144, 146 ; 240, 242, 244, 246 ; 340, 342, 344, 346 ; 401 ; 501 ; 601) est disposée au-dessus d'une bande de couche de substrat en Si respective (610) le long de la direction d'empilement (106 ; 408 ; 502 ; 602), dans lequel, de préférence, les bandes de couche de substrat en Si avec des bandes de diodes PIN respectives (140, 142, 144, 146 ; 240, 242, 244, 246 ; 340, 342, 344, 346 ; 401 ; 501 ; 601) disposés au-dessus sont séparés électriquement et spatialement les uns des autres par le matériau isolant (154 ; 254 ; 354 ; 403 ; 504, 603) de la couche de capteur (102; 202 ; 302 ; 406 ; 506 ; 606).

10. Dispositif formant capteur d'indice de réfraction (100 ; 200 ; 300 ; 400 ; 500 ; 600) selon l'une des revendications précédentes, dans lequel, au-dessus de chacune des bandes de diodes PIN (140, 142, 144, 146 ; 240, 242, 244, 246 ; 340, 342, 344, 346 ; 401 ; 501 ; 601) une bande de couche de contact Si respective (414 ; 612) est disposée le long de la direction d'empilement (106 ; 408 ; 502 ; 602), les bandes de couche de contact Si (414 ; 612) recouvrant au moins partiellement la bande de semi-conducteur de type p (148 ; 248 ; 348 ; 404 ; 511, 604), la bande de matériau semi-conducteur intrinsèque (152 ; 252 ; 352 ; 419 ; 510 ; 620) et la bande de semi-conducteur de type n (150 ; 250 ; 350 ; 402 ; 611) des bandes de diodes PIN (140, 142, 144, 146 ; 240, 242, 244, 246 ; 340, 342, 344, 346 ; 401 ; 501 ; 601), respectivement.

11. Dispositif formant capteur d'indice de réfraction (100 ; 200 ; 300 ; 400 ; 500 ; 600) selon la revendication 10, dans lequel les contacts-n (230, 231, 232, 233 ; 508) et/ou les contacts-p (234, 235 ; 626) sont formés à l'intérieur ou intégrés dans les bandes de couche de contact Si (414 ; 612) pour entrer directement en contact avec les bandes de semi-conducteur de type p (148 ; 248 ; 348 ; 404 ; 511 ; 604) et/ou les bandes de semi-conducteur de type n (150 ; 250 ; 350 ; 402 ; 611) des bandes de diodes PIN respectives (140, 142, 144, 146 ; 240, 242, 244, 246 ; 340, 342, 344, 346 ; 401 ; 501 ; 601), respectivement.

12. Dispositif formant capteur d'indice de réfraction (100 ; 200 ; 300 ; 400 ; 500 ; 600) selon l'une des revendications précédentes, dans lequel au moins une partie d'une surface extérieure (314 ; 426) du réseau de nano-trous (104 ; 304 ; 420) dans la direction d'empilement (106 ; 408 ; 502 ; 602) est pourvue d'une fonctionnalisation de surface fournissant des récepteurs configurés pour se lier à un analyte spécifique.

13. Procédé de fabrication d'un dispositif formant capteur d'indice de réfraction (100 ; 200 ; 300 ; 400 ; 500 ; 600), le procédé comprenant :
- la fabrication d'une couche de capteur (102 ; 202 ; 302 ; 406 ; 506 ; 606) comprenant un certain nombre de bandes de diodes PIN (140, 142, 144, 146 ; 240, 242, 244, 246 ; 340, 342, 344, 346 ; 401 ; 501 ; 601) et un matériau isolant (154 ; 254; 354 ; 403 ; 504 ; 603), chacune des bandes de diodes PIN (140, 142, 144, 146 ; 240, 242, 244, 246 ; 340, 342, 344, 346 ; 401 ; 501 ; 601) est formé par une bande de semi-conducteur de type p (148 ; 248 ; 348 ; 404 ; 511 ; 604), une bande de matériau semi-conducteur intrinsèque (152 ; 252 ; 352 ; 419, 510 ; 620) et une bande de semi-conducteur de type n (150 ; 250 ; 350 ; 402 ; 611), et dans lequel la couche de capteur (102 ; 202 ; 302 ; 406 ; 506 ; 606) est fabriquée de telle sorte que les bandes de diodes PIN (140, 142, 144, 146 ; 240, 242, 244, 246 ; 340, 342, 344, 346 ; 401 ; 501 ; 601) s'étendent parallèlement les uns aux autres dans la couche de capteur (102 ; 202 ; 302; 406 ; 506 ; 606) le long d'une direction dans le plan (212) qui est perpendiculaire à une direction d'empilement (106 ; 408 ; 502 ; 602) de couches du dispositif formant capteur d'indice de réfraction (100 ; 200 ; 300 ; 400 ; 500 ; 600), et tel que lesdites bandes de diodes PIN (140, 142, 144, 146 ; 240, 242, 244, 246 ; 340, 342, 344, 346 ; 401 ; 501 ; 601) soient séparées électriquement et spatialement les unes des autres par le matériau isolant (154 ; 254 ; 354 ; 403 ; 504 ; 603), et tel que dans chacune des bandes de diodes PIN (140, 142, 144, 146 ; 240, 242, 244, 246 ; 340, 342, 344, 346 ; 401 ; 501 ; 601), la bande de semi-conducteur de type p (148 ; 248 ; 348 ; 404 ; 511 ; 604), la bande de matériau semi-conducteur intrinsèque (152 ; 252 ; 352 ; 419 ; 510 ; 620) et la bande de semi-conducteur de type n (150 ; 250 ; 350 ; 402 ; 611) sont disposées les unes à côté des autres perpendiculairement à la direction d'empilement (106 ; 408 ; 502 ; 602), et
- la fabrication d'un réseau de nano-trous (104 ; 304 ; 420) au-dessus de la couche de capteur (102 ; 202 ; 302 ; 406 ; 506 ; 606) le long de ladite direction d'empilement (106; 408 ; 502 ; 602), dans lequel ledit réseau de nano-trous (104 ; 304 ; 420) est formé par un élément en forme de plaque (116 ; 428) comportant un certain nombre de traversées (118, 120, 122, 124, 126 ; 306 ; 430) s'étendant à travers ledit élément en forme de plaque (116 ; 428) et s'étendant parallèlement à la direction d'empilement (106 ; 408 ; 502 ; 602), et dans lequel lesdites traversées (118, 120, 122, 124, 126 ; 306; 430) sont configurés de telle sorte que la lumière incidente puisse traverser les traversées (118, 120, 122, 124, 126 ; 306 ; 430), le réseau de nano-trous étant configuré de telle sorte que la lumière incidente sur le réseau de nano-trous induise des polaritons de plasmons de surface dans le réseau de nano-trous.

14. Procédé de détection d'un analyte, le procédé comprenant les étapes consistant à :
- fournir un dispositif formant capteur d'indice de réfraction (100 ; 200 ; 300 ; 400 ; 500 ; 600) selon l'une des revendications 1 à 12,
- diriger une lumière à une longueur d'onde comprise entre 400 nm et 1600 nm sur le réseau de nano-trous (104 ; 304 ; 420) du dispositif formant capteur d'indice de réfraction (100 ; 200 ; 300 ; 400 ; 500 ; 600) de telle sorte que ladite lumière traverse les traversées (118, 120, 122, 124, 126 ; 306 ; 430) pour atteindre la couche de capteur (102 ; 202 ; 302 ; 406 ; 506 ; 606),
- détecter un photocourant (255) présent dans la couche de capteur (102 ; 202 ; 302 ; 406 ; 506 ; 606) qui est induit par l'absorption de la lumière incidente dans la couche de capteur (102 ; 202 ; 302 ; 406 ; 506 ; 606),
- exposer le dispositif formant capteur d'indice de réfraction (100 ; 200 ; 300 ; 400 ; 500 ; 600) à un fluide liquide ou gazeux,
- déterminer une variation d'un indice de réfraction local associé au fluide liquide ou gazeux sur la base du photocourant détecté (255), et
- identifier si un analyte particulier est présent dans ledit fluide liquide ou gazeux sur la base de la variation déterminée de l'indice de réfraction local.
